(19) Europäisches Patentamt European Patent Office Office européen des brevets

(11) **EP 3 109 014 B1**

(12) **FASCICULE DE BREVET EUROPEEN**

(45) Date de publication et mention
de la délivrance du brevet:
**20.09.2017 Bulletin 2017/38**

(51) Int Cl.:
***B25J 13/02*** *(2006.01)* ***B25J 19/00*** *(2006.01)*

(21) Numéro de dépôt: **16175633.3**

(22) Date de dépôt: **22.06.2016**

(54) **BRAS ARTICULÉ MOTORISÉ À CABESTAN À CÂBLE COMPRENANT UN FREIN**

MOTORISIERTER GELENKARM MIT CAPSTAN MIT KABEL, DER EINE BREMSE UMFASST

MOTORISED ARTICULATED ARM WITH CABLE CAPSTAN COMPRISING A BRAKE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.06.2015 FR 1556001**

(43) Date de publication de la demande:
**28.12.2016 Bulletin 2016/52**

(73) Titulaire: **Haption**
**53210 Soulgé-sur-Ouette (FR)**

(72) Inventeur: **LOUVEAU, François**
**53170 Villiers Charlemagne (FR)**

(74) Mandataire: **Vidon Brevets & Stratégie**
**16B, rue de Jouanet**
**B.P. 90333**
**Technopole Atalante**
**35703 Rennes Cedex 7 (FR)**

(56) Documents cités:
**WO-A1-2011/157757    FR-A1- 2 950 831**

- **KWON T B ET AL: "Force display using a hybrid haptic device composed of motors and brakes", MECHATRONICS, PERGAMON PRESS, OXFORD, GB, vol. 16, no. 5, 1 juin 2006 (2006-06-01), pages 249-257, XP024961899, ISSN: 0957-4158, DOI: 10.1016/J.MECHATRONICS.2005.12.003 [extrait le 2006-06-01]**
- **ROSSA CARLOS ET AL: "Design and Control of a Dual Unidirectional Brake Hybrid Actuation System for Haptic Devices", IEEE TRANSACTIONS ON HAPTICS, IEEE, USA, vol. 7, no. 4, 1 octobre 2014 (2014-10-01) , pages 442-453, XP011568389, ISSN: 1939-1412, DOI: 10.1109/TOH.2014.2346501 [extrait le 2014-12-19]**

**Description**

**1. Domaine de l'invention**

Le domaine de l'invention est celui des interfaces haptiques, des systèmes à retour d'effort, des bras maîtres pour la téléopération et des robots de comanipulation. Le domaine connexe est celui des automates dévolus à la manipulation d'objets dans l'espace.

Plus précisément, l'invention concerne un organe de commande homme-machine permettant de contraindre ou d'accompagner le mouvement d'un opérateur notamment dans le but de stimuler son système sensoriel sur le plan kinesthésique.

L'invention a de nombreuses applications haptiques, telles que par exemple la téléopération, l'activité de soutien à la rééducation, la comanipulation humain / robot lors d'interventions médicales ou industrielles, l'interconnexion d'un être humain avec un environnement de réalité virtuelle.

**2. Art antérieur**

Les robots travaillant en collaboration avec l'humain sont de plus en plus utilisés dans de multiples domaines d'application.

De tels robots pourront par exemple être utilisés dans le domaine de la chirurgie laparoscopique qui consiste notamment à pratiquer des trous de faible diamètre dans le corps d'un patient pour y glisser des outils chirurgicaux en vu de réaliser une opération chirurgicale.

Dans ce cas, comme dans celui d'autres applications, le robot comprend par exemple un bras articulé mobile en rotation par rapport à un bâti, le cas échéant selon plusieurs axes, et des moteurs susceptibles de transmettre des couples au bras autour de ces axes.

Le bras est destiné à porter un instrument chirurgical qui sera déplacé par un chirurgien au cours d'une opération. Afin de stimuler les récepteurs haptiques du chirurgien au cours de l'opération de telle manière qu'il perçoive le milieu avec lequel il interagit pendant l'opération, le robot est préalablement programmé afin que le ou les moteurs transmettent au bras des couples moteurs ou résistants correspondants aux différentes zones (tissus, organes, nerfs...) du milieu dans lequel agit le chirurgien. Les moteurs permettent ainsi d'accompagner ou de contraindre les mouvements du bras articulé et par conséquent ceux du chirurgien manipulant le bras. Le chirurgien reçoit ainsi des retours d'efforts au cours de l'opération lui permettant de sentir au mieux le milieu qu'il manipule.

Pour remplir son rôle, le robot doit non seulement transmettre des couples au bras articulé via les moteurs mais également contrôler les efforts qui lui sont appliqués par son environnement, par exemple un opérateur comme un chirurgien, de façon à adapter les couples que ses moteurs transmettent. Le robot est donc contrôlé en effort.

On connaît ainsi, dans l'état de la technique, différentes façons de contrôler un robot en effort. Au rang de ces techniques figure celle qui consiste à utiliser un robot mécaniquement réversible mettant en oeuvre des articulations motorisées. Ces robots permettent d'obtenir au niveau des moteurs une bonne estimation des efforts qui sont appliqués à l'extrémité du robot. Le robot est en effet conçu de telle façon que ses articulations ne frottent pas. Ainsi les efforts appliqués sur l'extrémité du robot sont transmis au travers des chaînes de transmission jusqu'aux moteurs. Comme le courant circulant dans les moteurs est proportionnel au couple qu'ils génèrent, il est possible d'estimer par la mesure des courants circulant dans les moteurs, les efforts appliqués sur le robot et de contrôler en conséquence le robot.

Pour assurer un bon niveau de fiabilité dans l'évaluation des efforts, le frottement dans les articulations du robot doit être très faible. Dans ce but, il est connu de mettre en oeuvre des articulations à entraînement direct. Toutefois, pour que l'articulation génère des couples suffisants, les moteurs doivent être dimensionnés en conséquence. Ils sont alors de taille importante ce qui nuit à la compacité du robot.

Pour utiliser des moteurs de plus petites dimensions afin d'améliorer la compacité du robot, les couples délivrés par les moteurs doivent être amplifiés (et leur fréquence de rotation doit être réduite) par un réducteur placé en sortie des moteurs. Pour ce faire, il est connu de mettre en oeuvre des réducteurs à câble.

Les réducteurs à câble, outre le fait qu'ils assurent de manière efficace leur fonction primaire de réducteur, présentent l'avantage de ne pas induire de frottement, comme ceci serait par exemple le cas d'un réducteur à engrenages ou d'un réducteur à courroie. En effet, un réducteur à engrenages introduirait un frottement entre les dents des engrenages. D'autre part, une légère précontrainte entre les axes d'entrée et de sortie est généralement utilisée pour minimiser le jeu de transmission. Cette précontrainte rajoute du frottement sur les roulements et entre les dents en contact. Un réducteur à courroie introduirait également un frottement important. Pour que la courroie travaille correctement, elle doit être tendue. Cette tension ajoute du frottement dans les roulements des axes d'entrée et de sortie. D'autre part, la courroie frotte lors de son arrivée et son départ des poulies.

Le document US 5 046 375 décrit un exemple de réducteur à câble comprenant une poulie placée en sortie d'un moteur, une poulie solidaire de l'articulation et un câble enroulé autour de la poulie solidaire du moteur en passant autour de la poulie solidaire de l'articulation. Une mise en rotation dans un sens ou dans l'autre du moteur entraine en rotation la poulie solidaire de son arbre ainsi que l'articulation via la poulie solidaire de celle-ci et le câble.

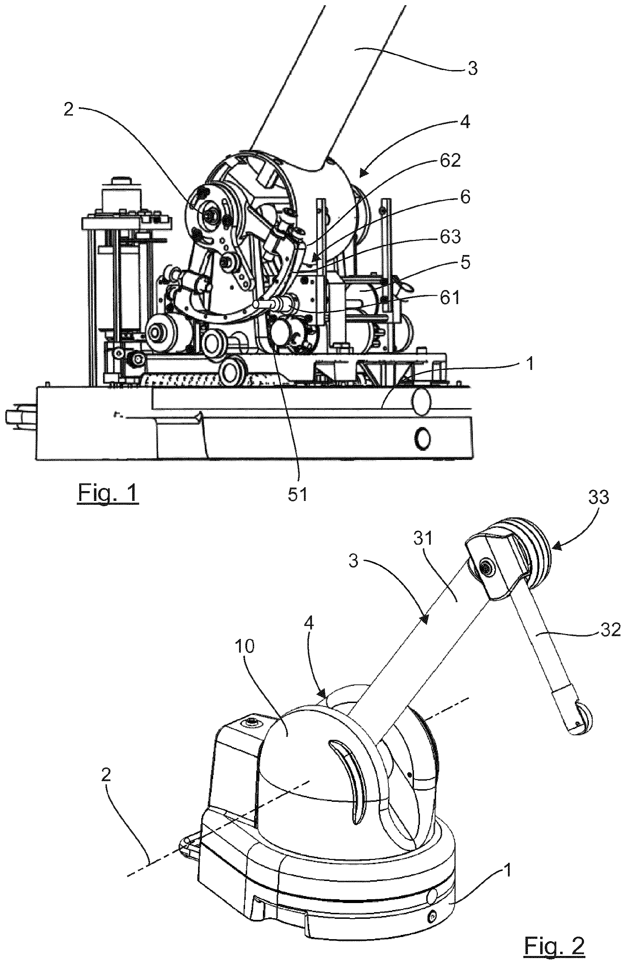

On connaît enfin des réducteurs à câble de type cabestan tel que celui illustré à la figure 1.

Cette figure illustre partiellement un bras articulé motorisé d'interface haptique. Ce bras articulé comprend un bâti 1 auquel est lié un bras 3 de manière mobile en rotation autour d'un axe 2 au moyen d'une articulation 4. Le bras 3 peut être entrainé en rotation autour de l'axe 2 au moyen d'un moteur 5 et d'un réducteur à câble de type à cabestan 6.

Ce réducteur 6 comprend :

- une poulie 61 de petit diamètre appelée « poulie moteur » liée à l'arbre de sortie 51 d'un moteur 5 ;
- une poulie ou portion de poulie de plus grand diamètre 62 appelée « secteur » qui est solidaire du bras articulé 3 et dont l'axe de rotation est identique à celui du bras ;
- un câble 63, dont les extrémités sont liées au secteur 62, s'étendant le long du secteur 62 en s'enroulant autour de la poulie moteur 61.

Le rapport de réduction est déterminé par le rapport de la somme du rayon de la poulie moteur 61 et du rayon du câble d'une part et de la somme du rayon du secteur 62 et du rayon du câble d'autre part.

La mise en rotation du moteur induit une rotation de la poulie moteur 61. Le secteur 62, alors entrainé en rotation par le câble 63 à une vitesse plus lente, entraine à son tour le bras articulé 3 en rotation autour de l'axe 2 en lui transmettant un couple plus élevé que le couple de sortie du moteur 5.

Les réducteurs à câble, et notamment de type à cabestan, présentent l'avantage d'induire de très faibles frottements. En effet, le câble transmet des efforts tangentiellement aux axes des poulies. Les roulements de guidage des poulies ne sont donc pas chargés par les efforts transmis. La mise en oeuvre de réducteurs de ce type permet donc d'assurer de manière efficace la fonction de réducteur et de procéder de manière fiable à la mesure des efforts transmis au bras sans que la mesure ne soit perturbée par des frottements importants dans le réducteur. L'évaluation de ces efforts est obtenue en mesurant le courant traversant le moteur dont la valeur est proportionnelle au couple qu'il délivre.

La capacité en effort des robots, c'est-à-dire leur capacité à transmettre au bras des couples moteurs et des couples résistants, respectivement pour guider ou contraindre les mouvements de l'utilisateur, est un critère de conception important. Par conséquent, leurs concepteurs n'ont de cesse que d'améliorer la capacité en effort des robots tout en essayant de maintenir leur compacité. Ce compromis est obtenu en travaillant sur le dimensionnement des moteurs et du rapport de réduction des réducteurs.

S'agissant du choix de la motorisation, le concepteur analysera les aspects suivants.

Dans l'utilisation des robots co-manipulés tels que ceux listés précédemment, il apparait que le besoin en capacité d'effort résistif (transmission de couples résistants) est beaucoup plus important que celui en effort moteur (transmission de couples moteurs). En effet, le guidage de la main de l'utilisateur par la transmission au bras d'un couple moteur est fidèlement suivi par l'utilisateur. A l'inverse, un blocage de sa main par la transmission au bras d'un couple résistant vient contrecarrer les intentions de l'utilisateur. Il faudra à ce dernier un temps de réaction avant de comprendre que l'effort ressenti lui signale une zone interdite. Au cours de ce temps de réaction, l'utilisateur aura tendance à forcer sur le bras contre l'effort qui lui est imprimé par le moteur.

Par conséquent, les moteurs doivent être dimensionnés de manière à garantir que les couples maximaux qu'ils sont capables de délivrer sont suffisants pour contraindre convenablement le déplacement de la main d'un utilisateur lorsque l'on souhaite lui empêcher l'accès à une zone donnée de sorte que cette zone ne lui soit effectivement pas accessible.

Toutefois, l'encombrement des moteurs est sensiblement proportionnel au couple maximal qu'ils sont susceptibles de délivrer. L'optimisation de la compacité des bras articulés motorisés passera donc généralement par le dimensionnement au plus juste des moteurs.

De façon à améliorer la compacité d'un bras motorisé, il peut être envisagé de mettre en oeuvre un frein pour générer l'effort résistif nécessaire pour contraindre le mouvement de l'utilisateur. En effet, la mise en oeuvre d'un frein de grande capacité permet de seconder le moteur et d'en réduire la taille et ainsi d'optimiser l'encombrement du robot tout en disposant d'un effort résistif important.

L'article de Tae-Bum Kwon et Jae-Bok Song intitulé "Force display using a hybrid haptic device composed of motors and brakes" publié dans la revue Mechatronics n°16 (2006) par Elsevier ScienceDirect décrit ainsi un bras articulé motorisé d'interface haptique comprenant un réducteur à câble de type cabestan et des moyens de freinage.

Dans ce cas, il est tentant de dimensionner le moteur pour générer l'effort moteur nécessaire pour accompagner le mouvement de l'utilisateur et d'utiliser un frein pour générer l'effort résistif complémentaire pour contraindre le mouvement de l'utilisateur lorsque cela est nécessaire. Toutefois, lorsque le frein est bloqué, le moteur ne tourne plus. Il n'est donc plus possible de mesurer le courant électrique traversant le moteur dont la valeur, qui est proportionnelle au couple qu'il délivre, permet d'évaluer les efforts auxquels est soumis le bras et de réguler en conséquence le fonctionnement du ou des moteurs. Une fois le frein bloqué, il n'est donc plus possible de connaître le niveau d'effort appliqué sur le bras par son environnement. Il est par conséquent difficile de déterminer le moment opportun où relâcher le frein.

La définition du mode de pilotage du frein pour qu'il assiste le moteur au moment opportun sans perturber l'utilisation est donc difficile. Pourtant, le pilotage du frein est essentiel dans la mesure où un mauvais pilotage de frein induirait que l'utilisation du bras par l'opérateur ne serait pas très naturelle, intuitive.

S'agissant des contraintes de compacité, le concepteur analysera également les aspects suivants.

Pour réaliser de façon fiable la transmission du mouvement de la poulie au secteur du réducteur de type cabestan, des câbles en acier sont souvent utilisés. Le rayon d'enroulement minimum d'un câble sur une poulie est fourni par le fabricant du câble. Ce rayon d'enroulement minimum du câble va donc dimensionner la taille de la poulie moteur et par conséquent celle du secteur. Les câbles en acier les plus souples acceptent actuellement des rayons d'enroulement égaux à 16 fois leur rayon.

Par conséquent, pour parvenir à améliorer la compacité d'un robot, son concepteur cherchera à réduire le rayon de la poulie moteur et par conséquent celui du câble. Toutefois, pour un type de câble donné, sa résistance mécanique est proportionnelle à son rayon. En effet, plus le rayon du câble sera important plus sa résistance mécanique sera élevée.

On cherchera le plus souvent à réduire au maximum le diamètre du câble pour améliorer la compacité. Ceci induit toutefois le risque que, si un effort trop important est exercé sur le bras du robot, le câble se déforme. Dans des situations extrêmes, ceci pourrait conduire à la rupture du câble. Le fonctionnement du robot serait perturbé avec des conséquences plus ou moins dommageables et acceptables selon la nature de la tâche réalisée.

Toutefois, pour des applications sensibles, par exemple des applications médicales, ce type d'inconvénient doit être évité. Pour cela, un facteur de sécurité important en tenue sous charge des câbles est nécessaire. Ce facteur de sécurité impose l'utilisation de câble de diamètre important et donc un fort encombrement du réducteur ce qui nuit à la compacité globale du robot. Ce dimensionnement devra être réalisé en corrélation avec le choix de la motorisation afin d'obtenir la capacité en effort résistif requise.

Au final, les techniques de l'art antérieur ne permettent pas de procurer un robot bénéficiant d'un dimensionnement optimisé en termes :

- de capacité en effort résistif et moteur, et
- de compacité,

et dont le fonctionnement serait transparent pour l'utilisateur, c'est-à-dire qui permette d'accompagner ou de contraindre le mouvement de l'opérateur de façon naturelle, intuitive, c'est-à-dire notamment sans à coup.

Un besoin en ce sens existe donc.

### 3. Objectifs de l'invention

L'invention a notamment pour objectif d'apporter une solution efficace à au moins certains de ces différents problèmes.

En particulier, selon au moins un mode de réalisation, un objectif de l'invention est de fournir un bras articulé d'interface haptique à réducteur à câble qui dispose d'une forte capacité en effort en particulier résistif.

Notamment, l'invention a pour objectif, selon au moins un mode de réalisation, d'améliorer la capacité en effort résistif d'un tel bras articulé, tout en garantissant un fonctionnement naturel du dispositif.

Un autre objectif de l'invention est de fournir, dans au moins un mode de réalisation, un tel bras articulé qui soit compact.

Un autre objectif de l'invention est, selon au moins un mode de réalisation, de fournir un tel bras articulé qui soit simple de conception et/ou facile à mettre en oeuvre.

### 4. Présentation de l'invention

Pour ceci, l'invention propose un bras articulé motorisé d'interface haptique comprenant au moins :

- un bâti ;
- un bras lié audit bâti de manière mobile en rotation autour d'au moins un axe, des efforts étant susceptibles d'être appliqués audit bras par son environnement ;
- des moyens moteurs, comprenant un rotor, conçus pour délivrer au moins un couple résistant maximal autour dudit axe s'opposant au moins en partie auxdits efforts appliqués audit bras par son environnement ;
- une transmission principale audit bras dudit couple résistant généré par lesdits moyens moteurs, ladite transmission principale comprenant un réducteur à câble à cabestan ;
- des moyens d'évaluation dudit couple résistant transmis audit bras par lesdits moyens moteurs ;
- des moyens de freinage de la rotation dudit bras autour dudit axe ;
- des moyens d'activation desdits moyens de freinage lorsque ledit couple résistant maximal est atteint par lesdits moyens moteurs ;
- des moyens d'évaluation, après activation desdits moyens de freinage, des efforts transmis audits bras par ledit environnement, comprenant des moyens de détermination d'au moins une information représentative d'une déformation de ladite transmission sous l'effet desdits efforts ;
- des moyens de désactivation desdits moyens de freinage lorsque ladite information représentative d'une déformation de ladite transmission devient inférieure à une valeur seuil prédéterminée.

Ainsi, l'invention consiste à équiper un bras articulé motorisé d'interface haptique comprenant une transmission principale à réducteur à câble de type cabestan :

- d'un frein permettant de contraindre le déplacement du bras articulé lorsque le moteur ne le permet plus, et

- de moyens permettant d'évaluer, au cours d'une phase de freinage, les efforts appliqués au bras par son environnement en mesurant la déformation de la transmission principale due à ces efforts, le frein étant relâché lorsque ces efforts en cours de freinage passent en dessous d'une valeur seul prédéterminée correspondant à l'atteinte par ces efforts d'une valeur suffisamment faible pour que l'effort résistant demandé au moteur ne dépasse pas le couple résistant maximal pouvant être délivré par celui-ci.

Il est ainsi possible de dimensionner au plus juste le(s) moteur(s) pour optimiser la capacité en effort résistif du bras tout en garantissant une utilisation naturelle et intuitive du robot.

Selon une caractéristique envisageable, lesdits moyens d'évaluation d'au moins une information représentative d'une déformation de ladite transmission comprennent des moyens d'évaluation de la déformation dudit câble.

La déformation du câble donne une indication fidèle et précise de la déformation de la transmission.

Selon une caractéristique envisageable, lesdits moyens d'évaluation d'au moins une information représentative d'une déformation de ladite transmission sous l'effet desdits efforts transmis audit bras par son environnement après activation desdits moyens de freinage comprennent :

- des moyens de détermination de la position angulaire dudit rotor autour de son axe de rotation ;
- des moyens d'estimation de la position angulaire théorique dudit bras autour de son axe de rotation par rapport audit bâti à partir de ladite position angulaire dudit rotor ;
- des moyens de détermination de la position angulaire réelle dudit bras autour de son axe de rotation par rapport audit bâti ;
- des moyens de détermination de la différence entre ladite valeur théorique et ladite valeur réelle de la position angulaire dudit bras autour de son axe de rotation ;

lesdits moyens de désactivation étant conçus pour désactiver lesdits moyens de freinage lorsque ladite différence devient inférieure à ladite valeur seuil prédéterminée.

Le fait de déterminer la différence entre la position réelle du bras et sa position théorique permet d'obtenir une estimation de la déformation de la transmission et ainsi des efforts imprimés au bras par son environnement, ce qui permet de piloter efficacement la désactivation du frein au cours d'un freinage.

Selon une caractéristique envisageable, lesdits moyens de détermination de la position angulaire réelle dudit bras autour de son axe de rotation par rapport audit bâti comprennent un capteur de position angulaire dudit bras autour de son axe de rotation.

Ceci permet de manière simple mais précise et efficace de déterminer la position angulaire réelle du bras.

Selon une caractéristique envisageable, ladite transmission principale comprend :

- un élément d'entraînement lié en rotation audit bras, ledit élément d'entrainement comprenant au moins un secteur angulaire dont l'axe est confondu avec l'axe de rotation dudit bras ;
- une poulie d'entraînement liée auxdits moyens moteur;

ledit câble dudit réducteur à câble s'étendant le long dudit secteur angulaire en s'enroulant autour de ladite poulie, les extrémités dudit câble étant fixées audit élément d'entrainement.

Selon une caractéristique envisageable, un bras selon l'invention comprend une transmission auxiliaire dudit couple résistant audit bras, ladite transmission auxiliaire pouvant prendre au moins deux états :

- un état inactif, pris tant que lesdits efforts appliqués sur ledit bras par son environnement contre l'effet dudit couple sont inférieurs à un seuil prédéterminé, dans lequel ladite transmission auxiliaire ne transmet aucun couple audit bras ;
- un état actif, pris lorsque lesdits efforts appliqués sur ledit bras par son environnement contre l'effet dudit couple sont supérieurs à un seuil prédéterminé, dans lequel ladite transmission principale ne transmet aucun couple audit bras.

Un bras articulé d'interface haptique selon cette variante est ainsi équipé d'une transmission principale à réducteur à câble et d'une transmission auxiliaire ayant des rapports de réduction identiques, la transmission auxiliaire étant mise en oeuvre en substitution de la transmission principale à réducteur à câble lorsque les efforts appliqués sur le bras par son environnement deviennent supérieurs à une certaine valeur.

Il est ainsi possible de dimensionner au plus juste le réducteur à câble pour optimiser la compacité du bras tout en garantissant une très bonne tenue mécanique, en d'autres termes un bon facteur de sécurité, lorsqu'un effort trop élevé pour le réducteur à câble est appliqué au bras.

La mise en oeuvre de l'invention permet ainsi de procurer un bras articulé d'interface haptique robuste et compact pouvant par exemple trouver des applications dans des domaines sensibles tel que notamment le domaine médical.

Selon une caractéristique envisageable, ladite transmission auxiliaire est configurée pour prendre ledit état actif lorsque les efforts appliqués par l'environnement audit bras contre l'effet dudit couple résistant induisent une déformation dudit câble supérieure à un seuil prédéterminé.

Ce seuil sera déterminé de manière telle que la transmission auxiliaire s'active avant que le couple généré sur le bras n'induise une déformation du câble de nature à le dégrader. On garantit ainsi la sécurité et la fiabilité du bras selon l'invention.

Selon une caractéristique envisageable, ladite transmission auxiliaire comprend :

- un pignon lié auxdits moyens moteurs et monté dans l'axe de ladite poulie,
- au moins une portion de roue dentée solidaire dudit élément d'entrainement et engrenant avec ledit pignon ;

le rapport de réduction de ladite transmission auxiliaire étant identique à celui de ladite transmission principale, l'entraxe entre l'axe de rotation dudit pignon et l'axe de rotation de ladite roue dentée étant supérieur à l'entraxe entre l'axe de rotation de ladite poulie et l'axe de rotation dudit élément d'entrainement de telle sorte que ledit pignon et ladite roue sont en contact et engrènent l'un avec l'autre seulement lorsque ladite transmission auxiliaire est dans ledit état actif.

Selon une caractéristique envisageable, lesdits moyens d'évaluation d'au moins une information représentative d'une déformation de ladite transmission comprennent des moyens de détection de l'entrée ou non en contact dudit pignon avec ladite roue, ladite valeur seuil de l'information représentative de ladite déformation déclenchant la désactivation desdits moyens de freinage étant atteinte lorsque ledit pignon et ladite roue n'entrent plus en contact alors que lesdits moyens d'activation activent lesdits moyens de freinage.

Selon cette variante, les pignons de la transmission auxiliaire constituent un capteur permettant de savoir à quel moment, au cours d'un freinage, les efforts appliqués par l'environnement au bras sont suffisamment faibles pour que le frein puisse être relâché.

Selon une caractéristique envisageable, lesdits moyens de détection de l'entrée en contact dudit pignon avec ladite roue comprennent ledit pignon et ladite roue dentée qui constituent un circuit électrique ouvert tant qu'il ne sont pas en contact et fermé lorsqu'ils sont en contact.

Selon une caractéristique envisageable, la différence entre lesdits entraxes est comprise entre 0,1 et 0,5 fois la hauteur des dents dudit pignon et de ladite roue.

Une différence d'entraxe, c'est-à-dire un jeu entre les diamètres primitifs du pignon et de la roue, comprise à l'intérieur de cet intervalle permet d'obtenir un niveau de sécurité important en garantissant l'enclenchement de la transmission auxiliaire avant que le câble ne se dégrade.

Selon une caractéristique envisageable, la différence dE entre lesdits entraxes est déterminée selon la formule suivante :

$$dE = Cmax / (K. \sin(alpha).F)$$

avec alpha : angle de pression de l'engrenage
K : raideur du câble
F : facteur de sécurité
Cmax : charge maximale sur le câble

Selon une caractéristique envisageable, ledit bras est monté mobile en rotation par rapport audit bâti selon une pluralité d'axes, ledit bras articulé comprenant autant d'ensemble de moyens moteurs, de transmission principale, moyens d'évaluation du couple, de moyens de freinage, de moyens d'activation, de moyens d'évaluation d'au moins une information représentative d'une déformation, de moyens de désactivation, et le cas échéant de transmission auxiliaire, que d'axes autour desquels ledit bras peut tourner, chaque ensemble étant dédié à la transmission de couple selon un desdits axes.

Un bras selon l'invention peut ainsi présenter plusieurs degrés de liberté.

La présente invention couvre également des applications du bras selon l'une quelconque des variantes exposées plus haut à un domaine technique appartenant au groupe comprenant :

- interface haptique avec un environnement virtuel ;
- interface haptique avec un environnement de réalité augmentée ;
- rééducation thérapeutique ;
- conception assistée par ordinateur;
- téléopération ;
- entrainement sportif;
- formation aux gestes techniques.

La présente invention couvre également un procédé de pilotage d'un bras articulé motorisé d'interface haptique comprenant au moins :

- un bâti ;
- un bras lié audit bâti de manière mobile en rotation autour d'au moins un axe, des efforts étant susceptibles d'être appliqués audit bras par son environnement ;
- des moyens moteurs, comprenant un rotor, conçus pour délivrer au moins un couple résistant maximal autour dudit axe s'opposant au moins en partie auxdits efforts appliqués audit bras par son environnement ;
- une transmission principale audit bras dudit couple résistant généré par lesdits moyens moteurs, ladite transmission principale comprenant un réducteur à câble à cabestan ;
- des moyens de freinage de la rotation dudit bras autour dudit axe ;

ledit procédé comprenant :

- une étape d'évaluation dudit couple résistant transmis audit bras par lesdits moyens moteurs ;
- une étape d'activation desdits moyens de freinage lorsque ledit couple résistant maximal est atteint par lesdits moyens moteurs ;
- une étape d'évaluation, après activation desdits moyens de freinage, des efforts transmis audits bras par ledit environnement, comprenant une étape de détermination d'au moins une information représentative d'une déformation de ladite transmission principale sous l'effet desdits efforts ;
- une étape de désactivation desdits moyens de freinage lorsque ladite information représentative d'une déformation de ladite transmission principale devient inférieure à une valeur seuil prédéterminée.

Selon une caractéristique envisageable, ladite étape d'évaluation d'au moins une information représentative d'une déformation de ladite transmission sous l'effet desdits efforts transmis audit bras par son environnement après activation desdits moyens de freinage comprend :

- une étape de détermination de la position angulaire dudit rotor autour de son axe de rotation ;
- une étape d'estimation de la position angulaire théorique dudit bras autour de son axe de rotation par rapport audit bâti à partir de ladite position angulaire dudit rotor ;
- une étape de détermination de la position angulaire réelle dudit bras autour de son axe de rotation par rapport audit bâti ;
- une étape de détermination de la différence entre ladite valeur théorique et ladite valeur réelle de la position angulaire dudit bras autour de son axe de rotation ;

ladite étape de désactivation étant mise en oeuvre lorsque ladite différence devient inférieure à ladite valeur seuil prédéterminée.

Selon une caractéristique envisageable, ledit bras articulé motorisé comprend une transmission auxiliaire dudit couple résistant audit bras, ladite transmission auxiliaire pouvant prendre au moins deux états :

- un état inactif, pris tant que lesdits efforts appliqués sur ledit bras par son environnement contre l'effet dudit couple sont inférieurs à un seuil prédéterminé, dans lequel ladite transmission auxiliaire ne transmet aucun couple audit bras ;
- un état actif, pris lorsque lesdits efforts appliqués sur ledit bras par son environnement contre l'effet dudit couple sont supérieurs à un seuil prédéterminé, dans lequel ladite transmission principale ne transmet aucun couple audit bras.

ladite transmission auxiliaire comprenant :

- un pignon lié auxdits moyens moteurs et monté dans l'axe de ladite poulie,
- au moins une portion de roue dentée solidaire dudit élément d'entrainement et engrenant avec ledit pignon ;

le rapport de réduction de ladite transmission auxiliaire étant identique à celui de ladite transmission principale, l'entraxe entre l'axe de rotation dudit pignon et l'axe de rotation de ladite roue dentée étant supérieur à l'entraxe entre l'axe de rotation de ladite poulie et l'axe de rotation dudit élément d'entrainement de telle sorte que ledit pignon et ladite roue sont en contact et engrènent l'un avec l'autre seulement lorsque ladite transmission auxiliaire est dans ledit état actif ;
ladite étape d'évaluation d'au moins une information représentative d'une déformation de ladite transmission comprenant une étape de détection de l'entrée ou non en contact dudit pignon avec ladite roue, ladite valeur seuil de l'information représentative de ladite déformation déclenchant la désactivation desdits moyens de freinage étant atteinte lorsque ledit pignon et ladite roue n'entrent plus en contact alors que lesdits moyens de freinage sont activés.

## 5. Liste des figures

D'autres caractéristiques et avantages de l'invention apparaîtront à la lecture de la description suivante de modes de réalisation particuliers, donnés à titre de simples exemples illustratifs et non limitatifs, et des dessins annexés parmi lesquels :

- la figure 1 illustre une vue partielle en perceptive d'un bras articulé d'interface haptique selon l'art antérieur;
- la figure 2 illustre une vue en perspective d'un bras articulé d'interface haptique selon un premier mode de réalisation de l'invention ;
- la figure 3 illustre le bras articulé de la figure 2 dont ont a ôté le capotage ;
- la figure 4 illustre une vue agrandie du mécanisme de transmission du bras articulé de la figure 3 ;
- la figure 5 illustre une vue en perspective d'un bras articulé d'interface haptique selon un deuxième mode de réalisation de l'invention dont ont a ôté le capotage ;
- la figure 6 illustre une vue partielle agrandie du mécanisme de transmission d'un bras articulé selon le deuxième mode de réalisation ;
- la figure 7 illustre une vue partielle agrandie de la transmission auxiliaire du bras illustré à la figure 6 ;
- les figures 8 et 9 illustrent des logigrammes des procédés de régulation du frein selon les premiers et deuxièmes modes de réalisation.

## 6. Description de modes de réalisation particuliers

### 6.1. Détection par déplacement angulaire

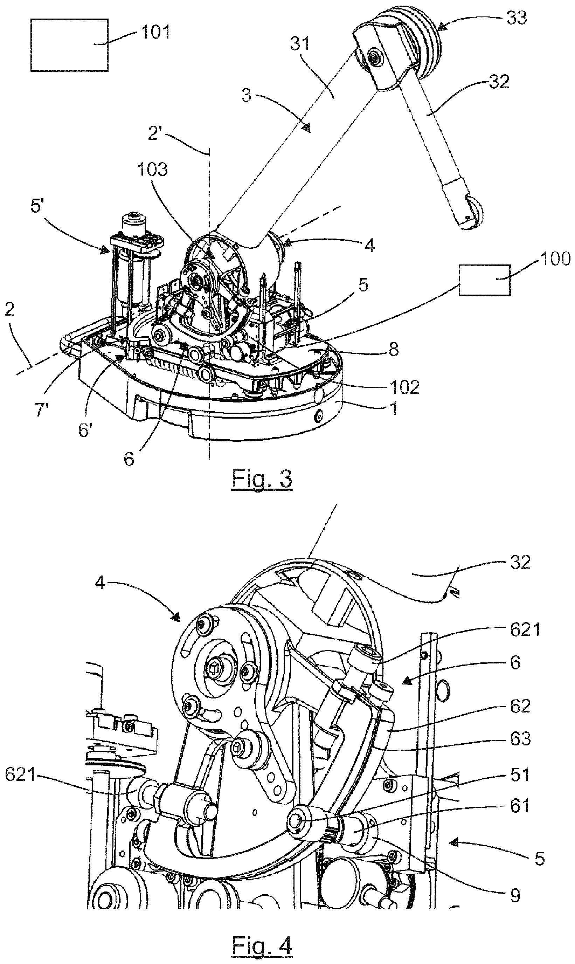

On présente, en relation avec les figures 2 à 4 et 8, un exemple d'un premier mode de réalisation d'un bras articulé motorisé d'interface haptique selon l'invention.

Ainsi que cela est représenté sur ces figures, un tel bras articulé motorisé comprend un bâti 1 et un bras 3 solidarisé au bâti 1 de manière mobile en rotation autour d'un axe 2 au moyen d'une articulation 4. Le mécanisme de transmission du bras articulé est recouvert d'un capotage 10.

Le bras 3 est destiné à être mis en mouvement autour de l'axe 2 par le milieu extérieur ou environnement du bras articulé motorisé, comme par exemple un opérateur, pour réaliser une tâche quelconque comme par exemple une opération chirurgicale, une manipulation d'objet, ...

Dans ce mode de réalisation, le bras 3 comprend deux portions de bras 31, 32 articulées entre-elles au moyen d'une articulation 33. Le bras 3 pourra bien évidemment prendre n'importe quelle forme adaptée à l'application visée. Il pourra par exemple comprendre une unique portion ou plus de deux portions articulées.

Le bras articulé comprend des moyens moteurs susceptibles d'être mis en oeuvre pour transmettre au bras 3 des couples, autour de l'axe 2. Dans ce mode de réalisation, ces moyens moteurs comprennent un moteur électrique 5. Les couples délivrés par le moteur pourront être tantôt moteurs tantôt résistants selon qu'il est souhaité d'accompagner ou de contraindre le mouvement du bras.

Comme cela vient d'être indiqué, le moteur 5 est notamment susceptible de délivrer un couple résistant s'opposant au déplacement du bras autour de son axe de rotation sous l'effet d'efforts lui étant imprimés par son environnement. Le moteur n'est par conception pas capable de délivrer un couple résistant au-delà d'une valeur de couple résistant maximal. Le moteur comprend classiquement un stator et un rotor mobile en rotation par rapport au stator.

Le bras articulé comprend une transmission principale 6 au bras 3 de couples autour de l'axe 2 générés par le moteur 5 et s'opposant ou non au mouvement imprimé au bras par son environnement.

Dans ce mode de réalisation, la transmission principale 6 comprend un réducteur à câble, en particulier de type cabestan.

Ce réducteur à câble de type à cabestan comprend classiquement une poulie 61 montée solidaire en rotation sur l'arbre de sortie 51 du moteur 5. Il comprend également une portion de poulie de plus grand diamètre 62, également appelée secteur ou secteur angulaire, solidaire en rotation du bras 3 et dont l'axe de rotation est confondu avec l'axe 2 de rotation du bras. Dans une variante, la portion de poulie ou secteur 62 pourra être remplacée par une poulie. Le réducteur comprend encore un câble 63. Les extrémités libres du câble sont solidarisées de part et d'autre du secteur 62 au moyen de vis 621 prévues à cet effet. Le câble 63 s'étend le long du secteur 62, plus particulièrement du contour périphérique de celui-ci, en s'enroulant autour de la poulie 61.

Selon le principe de fonctionnement du réducteur à cabestan, la distance entre l'axe de la poulie 61 et l'axe du secteur 62 est supérieure à la somme du rayon de la poulie 61, du secteur 62 et du diamètre du câble 63. Un écart d'un millimètre environ est souvent constaté. Cela évite que le câble frotte simultanément sur la poulie et le secteur.

Le bras articulé comprend des moyens d'évaluation du couple résistant transmis au bras 3 par le moteur 5. Ces moyens d'évaluation comprennent des moyens de mesure 100 du courant électrique d'alimentation consommé par le moteur dont la valeur est représentative du couple qu'il délivre. Ces moyens de mesure comprennent classiquement une électronique de commande qui mesure le courant circulant dans le moteur en le faisant passer dans une résistance calibrée. La mesure de la tension aux bornes de cette résistance permet d'avoir une image du courant dans le moteur. La valeur du couple délivré par le moteur est régie par la loi suivante :

$$C = Kt * I$$

C : Couple delivé par le moteur
Kt : Constante de couple du moteur
I : Courant circulant dans le moteur

Le bras articulé comprend des moyens de freinage 9 de la rotation du bras 3 autour de son axe de rotation 2. Ces moyens de freinage pourront par exemple comprendre un frein magnétique connu en soit de l'homme du métier tels que ceux commercialisés par la société KEB. Ils pourront alternativement comprendre tout autre type de frein pilotable à distance.

A titre d'exemple, un tel frein peut notamment comprendre un rotor et un stator, des aimants permanents et une bobine. Lorsque le frein n'est pas alimenté en courant électrique, les aimants permanents produisent un champ magnétique qui génère une force d'accouplement importante entre rotor et stator induisant entre eux un couple de freinage. Lorsque la bobine du frein est alimentée en courant électrique, le champ magnétique est neutralisé. Le rotor et le stator se séparent alors sans couple résiduel grâce à une lamelle ressort si bien qu'aucun couple de freinage n'est appliqué.

Le bras articulé comprend des moyens d'activation des moyens de freinage lorsque le couple résistant évalué atteint le couple résistant maximal pouvant être délivré par le moteur 5.

Le niveau de freinage pourra être régulé en pilotant le courant et donc le champ magnétique dans la bobine du frein. Une régulation pourrait permettre de limiter le courant circulant dans le frein et limiter ainsi l'augmentation de température du frein. Le courant pourrait être piloté grâce à un variateur comme un moteur.

Le bras articulé comprend des moyens de désactivation des moyens de freinage.

Le bras articulé comprend également des moyens d'évaluation permettant d'évaluer, après que les moyens de freinage ont été activés, les efforts transmis au bras 3 par son environnement. Ces moyens d'évaluation comprennent des moyens de détermination d'au moins une information représentative d'une déformation de la transmission principale sous l'effet des efforts transmis au bras par son environnement, en particulier du couple autour de son axe de rotation 2.

Plus particulièrement, l'information en question est selon ce mode de réalisation représentative de la déformation du câble. En effet, la déformation du câble, qui constitue une déformation de la transmission principale, est proportionnelle aux efforts appliqués sur le bras par son environnement.

Les moyens d'évaluation d'au moins une information représentative d'une déformation de la transmission principale sous l'effet des efforts transmis au bras par son environnement après activation des moyens de freinage comprennent dans ce mode de réalisation :

-   des moyens de détermination de la position angulaire du rotor du moteur 5 autour de son axe de rotation : ces moyens de détermination pourront comprendre un capteur d'angle ou encore un codeur 102 permettant de connaître la position angulaire du rotor par rapport au stator ;
-   des moyens d'estimation de la position angulaire théorique du bras autour de son axe de rotation par rapport au bâti à partir de la position angulaire du rotor : Il s'agit dans ce mode de réalisation de moyens de calcul de la position angulaire théorique, celle-ci étant égale au produit de la position angulaire du rotor du moteur par le rapport de réduction de la transmission principale ;
-   des moyens de détermination de la position angulaire réelle du bras autour de son axe de rotation par rapport au bâti : ces moyens de détermination pourront comprendre un capteur d'angle 103 permettant de connaître la position angulaire réelle du bras par rapport au bâti ;
-   des moyens de détermination de la différence entre la valeur théorique et la valeur réelle de la position angulaire du bras autour de son axe de rotation.

Dans ce mode de réalisation, les moyens de désactivation du frein sont conçus pour désactiver le frein lorsque la différence entre la valeur théorique et la valeur réelle de la position angulaire du bras autour de son axe de rotation devient inférieure à une valeur seuil prédéterminée, ce qui correspond à l'atteinte par l'information représentative de la déformation de la transmission principale de la valeur seuil en dessous de laquelle les moyens de désactivation sont mis en oeuvre pour désactiver le frein. Cette valeur seuil est déterminée de manière telle que son atteinte corresponde à l'atteint par les efforts transmis au bras par son environnement d'un niveau tel que le moteur redevient capable de s'y opposer sans l'aide du frein.

Le bras comprend une unité centrale 101 programmée pour réguler le fonctionnement du frein et réaliser l'ensemble des mesures et calculs nécessaires à la mise en oeuvre de cette régulation.

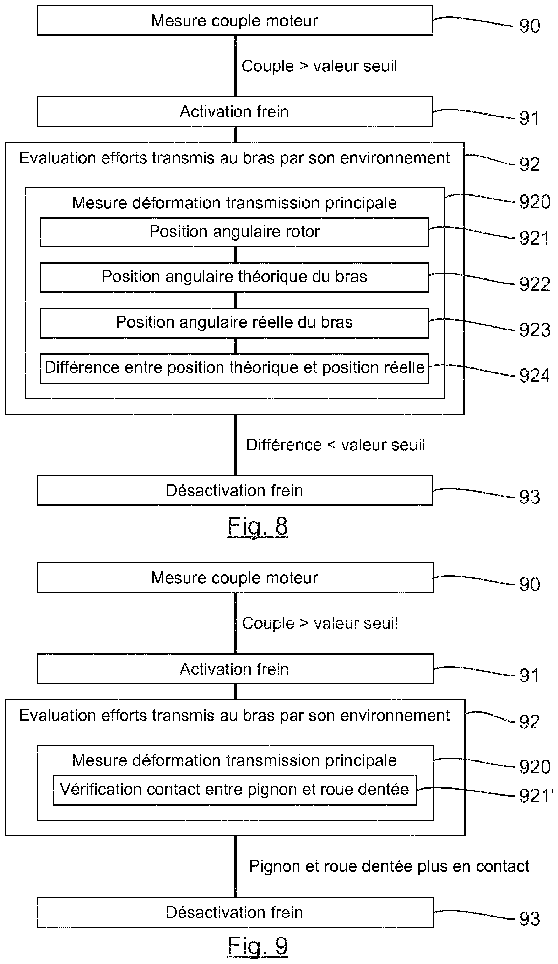

Selon ce mode de réalisation, la régulation du freinage est réalisée de la manière suivante en référence à la figure 8.

Une étape 90 de mesure du couple résistant délivré par le moteur est mise en oeuvre en continu. Cette étape comprend la mesure du courant d'alimentation du moteur et le calcul du couple délivré par le moteur à partir de la valeur de son courant d'alimentation selon la loi suivante :

$$C = Kt * I$$

C : Couple délivré par le moteur
Kt : Constante de couple du moteur
I : Courant circulant dans le moteur

La valeur du couple ainsi évaluée est comparée à la valeur maximale de couple résistant pouvant être délivrée par le moteur. Lorsque la valeur mesurée atteint la valeur maximale admissible, alors les moyens d'activation mettent alors en oeuvre une étape 91 d'activation du frein au cours de laquelle ils commandent l'activation du frein. Le moteur, qui n'est plus capable de s'opposer seul aux efforts appliqués au bras par son environnement pour contraindre le mouvement du bras du seul fait du couple résistant qu'il délivre, est alors assisté du frein pour y parvenir. On garanti ainsi que le mouvement du bras est correctement contraint chaque fois que cela est requis.

Pendant que le frein est activé, il n'est plus possible de connaître la valeur des efforts appliqués sur le bras par son environnement à partir de la valeur du courant d'alimentation du moteur puisque celui-ci est assisté par le frein de sorte que la valeur de ce courant n'est plus directement proportionnelle à ces efforts.

Une étape 92 d'évaluation des efforts transmis au bras par son environnement est alors mise en oeuvre. Cette étape consiste à mesurer au moins une information représentative de la déformation de la transmission principale, qui est en l'occurrence une information représentative de la déformation du câble. Au cours de cette étape 920, sont mises en oeuvre :

-   une étape 921 de détermination de la position angulaire du rotor autour de son axe de rotation grâce au capteur d'angle ou codeur 102 prévu à cet effet sur le moteur ;

- une étape 922 d'estimation de la position angulaire théorique du bras autour de son axe de rotation par rapport au bâti à partir de la position angulaire du rotor : pour cela, la position du rotor du moteur est multipliée par le rapport de réduction pour obtenir une estimation de la position théorique du bras ;
- une étape 923 de détermination de la position angulaire réelle du bras autour de son axe de rotation par rapport au bâti grâce au capteur d'angle 103 prévu à cet effet au niveau du bras ;
- une étape 924 de détermination de la différence entre la valeur théorique et la valeur réelle de la position angulaire du bras autour de son axe de rotation.

Les moyens de désactivation mettent alors en oeuvre une étape 93 de désactivation du frein lorsque la différence entre la valeur théorique et la valeur réelle de la position angulaire du bras autour de son axe de rotation devient inférieure à une valeur seuil prédéterminée. Cette valeur seuil est déterminée expérimentalement de manière telle que son atteinte corresponde à l'atteinte par les efforts transmis au bras par son environnement d'un niveau tel que le moteur redevient capable de s'y opposer sans l'assistance du frein.

Par exemple, si la position angulaire théorique est égale 10° et que la position angulaire réelle est égale à 18°, alors le bras a pivoté de 8° sous l'effet de la déformation du câble. Si l'on considère qu'en dessous d'un pivotement du bras sous l'effet de la déformation du câble égal à 4° le moteur redevient capable d'assurer la mise en contrainte du déplacement du bras sans l'assistance du frein, alors le frein sera désactivé lorsque la position angulaire réelle du bras sera de 14°.

Bien évidemment, le fonctionnement du bras n'a été décrit ici qu'en insistant sur les phases au cours desquelles le moteur transmet des couples résistants pour contraindre le déplacement du bras. Au cours de ce fonctionnement, le moteur peut également transmettre des couples moteurs au cours de phases pendant lesquelles il est souhaité d'accompagner le déplacement du bras. Le bras robotisé est classiquement programmé dans ce but et piloté en ce sens par l'unité centrale. Notamment, les efforts appliqués par les moteurs sont calculés par l'unité centrale afin d'interdire à l'utilisateur l'intervenir dans certaines zones.

### 6.2. Détection par activation d'une transmission auxiliaire

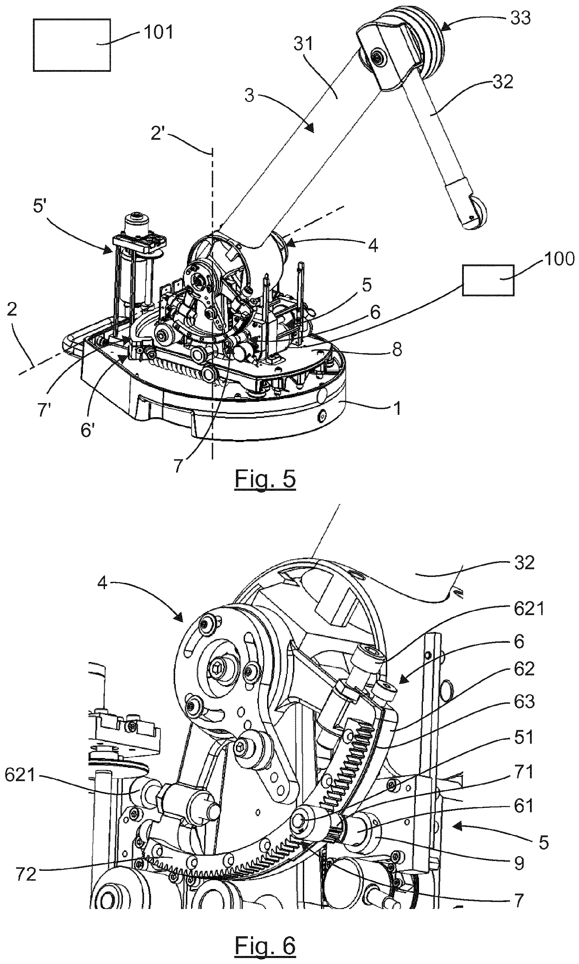

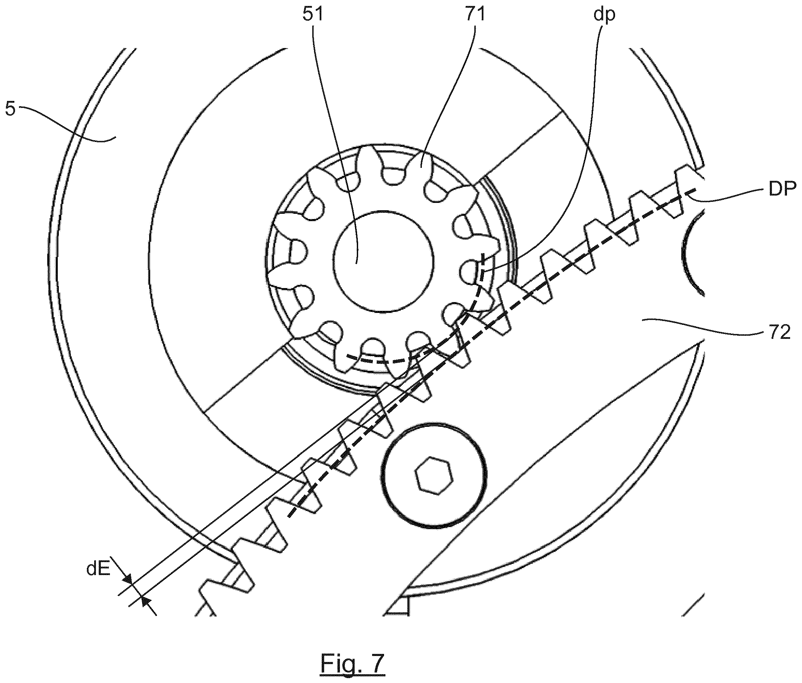

On présente en relation avec les figures 5 à 7 et 9, un deuxième mode de réalisation d'un bras articulé motorisé selon l'invention.

Un bras selon ce deuxième mode de réalisation est identique à celui selon le premier mode de réalisation hormis en ce qui concerne les moyens d'évaluation d'au moins une information représentative d'une déformation de la transmission principale qui sont différents de ceux décrits en relation avec le premier mode de réalisation et le fait qu'il comprend en outre une transmission auxiliaire.

Cette transmission auxiliaire 7 permet de transmettre au bras des couples autour de l'axe 2 générés par le moteur et s'opposant ou non au mouvement imprimé au bras 3 par son environnement.

Cette transmission auxiliaire comprend un pignon 71 monté solidaire en rotation sur l'arbre de sortie 51 du moteur 5 dans le prolongement de la poulie 61. Elle comprend également une portion de roue dentée 72 solidaire du secteur 62 et concentrique avec celui-ci. Ses dents forment saillie à la surface périphérique du secteur. Dans une variante, la portion de roue dentée pourra être remplacée par une roue dentée complète, en particulier lorsque le secteur sera remplacé par une poulie. La portion de roue dentée 72 est prévue pour engrener avec le pignon 71. Le pignon 71 et la roue dentée 72 constituent un réducteur à engrenages.

Le rapport de réduction du réducteur à câble de la transmission principale est égal à celui du réducteur à engrenages de la transmission auxiliaire. Pour cela, le diamètre primitif du pignon 71 est égal à la somme du diamètre de la poulie 61 et du diamètre du câble 63, et le diamètre primitif de la portion de roue dentée 72 est égal à la somme du diamètre du secteur 62 et du diamètre du câble 63.

La transmission auxiliaire 7 peut prendre au moins deux états :

- un état inactif, pris tant que les efforts appliqués par l'environnement sur le bras 3 contre l'effet du couple résistant généré par le moteur 5 sont inférieurs à un seuil prédéterminé ; dans cet état la transmission auxiliaire ne transmet aucun couple au bras : elle est inactive ;
- un état actif, pris lorsque les efforts appliqués par l'environnement sur le bras 3 contre l'effet du couple résistant généré par le moteur 5 sont supérieurs au seuil prédéterminé ; dans cet état la transmission principale ne transmet aucun couple au bras (elle est inactive), le couple étant transmis au bras seulement via la transmission auxiliaire.

Dans ce but, l'entraxe entre le pignon 71 et la portion de roue dentée 72 est légèrement augmenté par rapport à l'entraxe entre la poulie 61 et le secteur 62. Le diamètre primitif dp du pignon 71 n'est donc pas sécant ni tangent au diamètre primitif DP de la portion de roue dentée 72. Ces diamètres primitifs sont au contraire légèrement distants l'un de l'autre. Ainsi, dans l'état inactif, il existe un jeu entre les dents du pignon et les dents de la roue dentée.

Le réglage de cette différence d'entraxe pourra par exemple être obtenu en montant le moteur sur un support pouvant être déplacé sur une plage de réglage par rapport au bâti et maintenu en position après réglage.

Ainsi, tant que le niveau de charge appliqué par l'environnement sur le bras est inférieur à une certaine valeur, le pignon 71 ne se trouve pas en contact avec la portion de roue 72. La transmission de couple au bras 3 se fait alors par la transmission principale 6 incluant le réducteur à cabestan et non par la transmission auxiliaire qui est alors en état inactif.

Si un effort important est exercé sur le bras sur son environnement, le câble 63 s'allonge sans rompre jusqu'à ce que les dents du pignon 71 et de la portion de roue dentée 72 entrent en contact. La tenue mécanique de l'articulation est alors assurée par le système à engrenages de la transmission auxiliaire. Le couple est alors transmis au bras par la transmission auxiliaire à réducteur à engrenages qui est en état actif et non plus par la transmission principale à réducteur à câble.

Le jeu entre les dents du réducteur à engrenages dans l'état inactif et la raideur du câble déterminent l'effort limite pour passer du fonctionnement en mode réducteur à câble au fonctionnement en mode réducteur à engrenages.

Ce jeu sera préférentiellement compris entre 0,1 et 0,5 fois la hauteur des dents des engrenages. Il sera bien évidemment déterminé de manière telle que le câble ne rompe pas avant et pendant les phases où la transmission auxiliaire devient active. L'allongement du câble induisant le passage de la transmission auxiliaire de son état inactif à son état actif se fera préférentiellement dans le domaine de déformation élastique.

Ce jeu entre les diamètres primitifs du pignon et de la roue, qui est égale à la différence dE entre l'entraxe entre l'axe de rotation du pignon 71 et l'axe de rotation de la potion de roue dentée 72 et l'entraxe entre l'axe de rotation de la poulie 61 et l'axe de rotation du secteur 62 peut par exemple être déterminé de la manière suivante :

$$dE = Cmax \, / \, (K. \sin(alpha).F)$$

avec alpha : angle de pression de l'engrenage (pignon, roue)
K : raideur du câble
F : facteur de sécurité
Cmax : charge maximale sur le câble

La mise en oeuvre de la transmission auxiliaire permet donc de disposer de la transparence et de la fluidité du réducteur à câble tant que les efforts sur le bras restent faibles, et de la forte tenue mécanique du réducteur à engrenages lorsque la charge sur le bras devient plus forte.

Ainsi, il est possible de choisir un câble de petite dimension, et ainsi d'améliorer la compacité de l'articulation tout en garantissant sa tenue mécanique.

Selon ce deuxième mode de réalisation, la différence dE entre les entraxes est choisie de manière telle que lorsque le couple résistant délivré par le moteur atteint sa valeur maximale et n'est plus suffisant pour contrecarrer les efforts appliqués au bras par son environnement, le pignon 71 et la roue 72 viennent au contact l'un de l'autre. Cette mise en contact résulte de la déformation de la transmission principale, plus particulièrement de l'allongement du câble, sous l'effet des efforts appliqués au bras par son environnement.

Les moyens d'évaluation d'au moins une information représentative d'une déformation de la transmission principale comprennent des moyens de détection de l'entrée ou non en contact du pignon 71 avec la roue 72.

Les moyens de détection de l'entrée en contact du pignon avec la roue comprennent le pignon et la roue dentée, réalisés dans une matière conductrice, qui constituent un circuit électrique ouvert tant qu'il ne sont pas en contact et fermé lorsqu'ils sont en contact.

La désactivation des moyens de freinage est alors mise en oeuvre lorsque, au cours d'une phase de freinage, le pignon et la roue n'entrent plus en contact, ce qui correspond à l'atteinte par l'information représentative de la déformation de la transmission principale de la valeur seuil en dessous de laquelle les moyens de désactivation sont mis en oeuvre pour désactiver le frein. Ceci correspondant à l'atteinte par les efforts appliqués au bras par son environnement d'une valeur suffisamment faible pour que le couple résistant demandé au moteur ne dépasse pas le couple résistant maximal pouvant être délivré par celui-ci.

Selon ce mode de réalisation, la régulation du freinage est réalisée de la manière suivante en référence à la figure 9.

Une étape 90 d'évaluation du couple résistant délivré par le moteur est mise en oeuvre en continu. Cette étape comprend la mesure du courant d'alimentation du moteur et le calcul du couple en fonction de cette mesure selon la loi exprimée suivante :

selon la loi suivante :

$$C = Kt * I$$

C : Couple delivé par le moteur
Kt : Constante de couple du moteur
I : Courant circulant dans le moteur

La valeur du couple ainsi évalué est comparée à la valeur maximale de couple résistant pouvant être délivré par le moteur. Lorsque la valeur mesurée atteint la valeur maximale admissible, alors les moyens d'activation mettent en oeuvre une étape 91 d'activation du frein au cours de laquelle ils commandent l'activation du frein.

L'atteinte du couple résistant maximal pouvant être délivré par le moteur correspondant à l'instant auquel le pignon 71 et la roue 72 entrent en contact.

Ainsi, selon une variante, plutôt que d'évaluer le couple résistant fourni par le moteur en mesurant son courant d'alimentation, et de comparer la valeur mesurée à la valeur maximale pour déclencher ou non le frein, le frein pourrait être déclenché lorsque, au cours d'une phase de non freinage, le pignon et la roue entrent en contact. Les moyens techniques correspondants pourront alors être mis en oeuvre à cet effet.

Pendant que le frein est activé, une étape 92 d'évaluation des efforts transmis au bras par son environnement est mise en oeuvre, en l'occurrence le couple transmis par son environnement au bras autour de son axe de rotation. Cette étape consiste à mesurer au moins une information représentative de la déformation de la transmission principale, qui est en l'occurrence une information représentative de la déformation du câble. Au cours de cette étape 920, on détecte dans une étape 921' le moment auquel le pignon et la roue n'entre plus en contact pendant le freinage, c'est-à-dire le moment où le circuit qu'ils forment s'ouvre. Cet instant correspond à l'atteinte de la valeur seuil de déformation de la transmission principale en dessous de laquelle le frein peut être désactivé, le moteur étant alors capable de s'opposer aux efforts transmis au bras par son environnement pour contraindre son déplacement en délivrant un couple résistant suffisant. Ainsi, lorsqu'au cours d'un freinage, le pignon et la roue n'entrent plus en contact, les moyens de désactivation mettent en oeuvre une étape 93 de désactivation du frein.

Bien évidemment, le fonctionnement du bras n'a été décrit ici qu'en insistant sur les phases au cours desquelles le moteur transmet des couples résistants pour contraindre le déplacement du bras. Au cours de ce fonctionnement, le moteur peut également transmettre des couples moteurs au cours de phases pendant lesquelles il est souhaité d'accompagner le déplacement du bras. Le bras robotisé est classiquement programmé dans ce but et piloté par l'unité centrale. Notamment, les efforts appliqués par les moteurs sont calculés par l'unité centrale afin d'interdire à l'utilisateur l'intervenir dans certaine zone.

**6.3. Variantes**

Dans une variante, le dispositif selon le premier mode de réalisation pourra comprendre de transmission auxiliaire.

On rappelle que l'invention s'applique à un dispositif de mise en mobilité d'une interface haptique.

A titre indicatif, un tel dispositif de mise en mobilité d'une interface haptique peut être mise en oeuvre pour la rééducation du bras d'un patient ou encore pour la comanipulation lors d'une opération chirurgicale.

Bien évidemment, les déclinaisons possibles et envisageables des modes de réalisation du dispositif selon l'invention sont nombreuses.

Dans d'autres modes de réalisation particuliers, il peut être envisagé, sans sortir du cadre de l'invention, de mettre en oeuvre un tel dispositif pour fournir une interface haptique simple destinée par exemple aux applications de téléopération, de jeux vidéo, de réalité virtuelle, de conception assistée par ordinateur d'entrainement sportif ou de formation au geste technique. Selon une autre application envisageable, il peut être prévu d'intégrer un dispositif de mise en mouvement à un changeur d'outil pour lequel l'objet à animer ou à manipuler est une pince articulée. Selon encore une autre application envisageable, un organe de manoeuvre, tel qu'un robot manipulateur, incorpore avantageusement un dispositif selon l'invention.

Dans des variantes, un ou plusieurs réducteurs intermédiaires pourront être mis en oeuvre entre la sortie du moteur et l'arbre sur lequel est montée la poulie moteur.

Pour des raisons d'équilibre mécanique, une transmission principale ou un couple transmission principale/transmission auxiliaire pourra être mis en oeuvre de part et d'autre de l'articulation reliant le bras au bâti.

Dans le mode de réalisation décrit plus haut, le bras est mobile en rotation par rapport au bâti selon un unique axe. Dans des variantes, il pourrait être mobile en rotation par rapport au bâti selon plusieurs axes. Dans ce cas, le bras articulé motorisé comprendra autant d'ensemble, ou de couples d'ensembles, de moyens moteur, de transmission principale, de moyens d'évaluation du couple, de moyens de freinage, de moyens d'activation, de moyens d'évaluation d'au moins une information représentative d'une déformation, de moyens de désactivation, et le cas échéant de transmission auxiliaire que d'axes autour desquels le bras peut tourner, chaque ensemble étant dédié à la transmission de couple selon un desdits axes.

Le bras pourra par exemple être mobile en rotation par rapport au bâti selon un premier axe 2 et selon un deuxième axe 2' orthogonal au premier, un premier ensemble, ou couples d'ensembles, de moyens moteur 5, de transmission principale 6 et le cas échéant de transmission auxiliaire 7 étant dédier à la transmission de couple selon le premier axe 2 et un deuxième ensemble, ou couples d'ensembles, de moyens moteur 5', de transmission principale 6' et le cas échéant de transmission auxiliaire 7' étant dédier à la transmission de couple selon le deuxième axe 2'. Autant de moyens que nécessaire seront également mis en oeuvre pour assurer la régulation des freins des différents moteurs.

Par exemple, si le bras 3 est mobile en rotation autour de deux axes différents 2 et 2', l'ensemble constitué par le bras 3 mobile selon un premier axe 2, les transmissions principale 6 et le cas échéant auxiliaire 7 et le moteur 5 pourra être monté sur une platine 8 mobile en rotation par rapport au bâti 2 selon un autre axe 2'. Le bras motorisé pourra alors comprendre un autre moteur 5' ainsi qu'une autre transmission principale 6' et le cas échéant une autre transmission auxiliaire 7' pour entraîner la platine 8 en rotation selon cet autre axe 2' selon le même principe que celui selon lequel le couple du moteur 5 est transmis au bras 3 selon le premier axe 2.

Le bras 3 pourra bien entendu être mobile en rotation par rapport au bâti 2 selon plus de deux axes.

**Revendications**

1. Bras articulé motorisé d'interface haptique comprenant au moins :

   - un bâti (1) ;
   - un bras (3) lié audit bâti (1) de manière mobile en rotation autour d'au moins un axe (2), des efforts étant susceptibles d'être appliqués audit bras (3) par son environnement ;
   - des moyens moteurs (5), comprenant un rotor, conçus pour délivrer au moins un couple résistant maximal autour dudit axe (2) s'opposant au moins en partie auxdits efforts appliqués audit bras (3) par son environnement ;
   - une transmission principale (6) audit bras (3) dudit couple résistant généré par lesdits moyens moteurs (5), ladite transmission principale (6) comprenant un réducteur à câble (63) à cabestan ;
   - des moyens d'évaluation dudit couple résistant transmis audit bras (3) par lesdits moyens moteurs (5) ;
   - des moyens de freinage (9) de la rotation dudit bras (3) autour dudit axe (2) :
   - des moyens d'activation (101) desdits moyens de freinage (9) lorsque ledit couple résistant maximal est atteint par lesdits moyens moteurs (5) ;
   - des moyens d'évaluation (101, 102, 103), après activation desdits moyens de freinage (9), des efforts transmis audits bras (9) par ledit environnement, comprenant des moyens de détermination d'au moins une information représentative d'une déformation de ladite transmission (6) sous l'effet desdits efforts ;
   - des moyens de désactivation (101) desdits moyens de freinage (9) lorsque ladite information représentative d'une déformation de ladite transmission (6) devient inférieure à une valeur seuil prédéterminée.

2. Bras selon la revendication 1, dans lequel lesdits moyens d'évaluation (101, 102, 103) d'au moins une information représentative d'une déformation de ladite transmission comprennent des moyens d'évaluation de la déformation dudit câble (63).

3. Bras selon la revendication 1 ou 2, dans lequel lesdits moyens d'évaluation d'au moins une information représentative d'une déformation de ladite transmission sous l'effet desdits efforts transmis audit bras (3) par son environnement après activation desdits moyens de freinage (9) comprennent :

   - des moyens de détermination (102) de la position angulaire dudit rotor autour de son axe de rotation ;
   - des moyens d'estimation (102, 101) de la position angulaire théorique dudit bras (3) autour de son axe de rotation par rapport audit bâti (1) à partir de ladite position angulaire dudit rotor ;
   - des moyens de détermination (101, 103) de la position angulaire réelle dudit bras (3) autour de son axe de rotation par rapport audit bâti (1) ;
   - des moyens de détermination (101) de la différence entre ladite valeur théorique et ladite valeur réelle de la position angulaire dudit bras (3) autour de son axe de rotation ;

   lesdits moyens de désactivation (101) étant conçus pour désactiver lesdits moyens de freinage (9) lorsque ladite différence devient inférieure à ladite valeur seuil prédéterminée.

4. Bras selon la revendication 3, dans lequel lesdits moyens de détermination (101, 103) de la position angulaire réelle dudit bras (3) autour de son axe de rotation par rapport audit bâti (1) comprennent un capteur de position angulaire (103) dudit bras autour de son axe de rotation.

5. Bras selon l'une quelconque des revendications 1 à 4, dans lequel ladite transmission principale (6) comprend :

   - un élément d'entraînement (62) lié en rotation audit bras (3), ledit élément d'entrainement comprenant au moins un secteur angulaire dont l'axe est confondu avec l'axe de rotation (2) dudit bras (3) ;
   - une poulie d'entrainement (61) liée auxdits moyens moteur (5) ;

   ledit câble (63) dudit réducteur à câble s'étendant le long dudit secteur angulaire (62) en s'enroulant autour de ladite poulie (61), les extrémités dudit câble (63) étant fixées audit élément d'entrainement (62).

6. Bras selon l'une quelconque des revendications 1 à 5, comprenant une transmission auxiliaire (7) dudit couple résistant audit bras (3), ladite transmission auxiliaire pouvant prendre au moins deux états :

   - un état inactif, pris tant que lesdits efforts appliqués sur ledit bras (3) par son environnement contre l'effet dudit couple sont inférieurs à un seuil prédéterminé, dans lequel ladite transmission auxiliaire (7) ne transmet aucun couple audit bras (3) ;

- un état actif, pris lorsque lesdits efforts appliqués sur ledit bras (3) par son environnement contre l'effet dudit couple sont supérieurs à un seuil prédéterminé, dans lequel ladite transmission principale (6) ne transmet aucun couple audit bras (3).

**7.** Bras articulé selon la revendication 6 dans lequel ladite transmission auxiliaire (7) est configurée pour prendre ledit état actif lorsque les efforts appliqués par l'environnement audit bras (3) contre l'effet dudit couple résistant induisent une déformation dudit câble supérieure à un seuil prédéterminé.

**8.** Bras articulé selon la revendication 7, dans lequel ladite transmission auxiliaire (7) comprend :

- un pignon (71) lié auxdits moyens moteurs et monté dans l'axe de ladite poulie (61),
- au moins une portion de roue dentée (72) solidaire dudit élément d'entrainement (62) et engrenant avec ledit pignon (71) ;

le rapport de réduction de ladite transmission auxiliaire (7) étant identique à celui de ladite transmission principale (6),
l'entraxe entre l'axe de rotation dudit pignon (71) et l'axe de rotation de ladite roue dentée (72) étant supérieur à l'entraxe entre l'axe de rotation de ladite poulie (61) et l'axe de rotation dudit élément d'entrainement (62) de telle sorte que ledit pignon (71) et ladite roue (72) sont en contact et engrènent l'un avec l'autre seulement lorsque ladite transmission auxiliaire (7) est dans ledit état actif.

**9.** Bras selon la revendication 8, dans lequel lesdits moyens d'évaluation d'au moins une information représentative d'une déformation de ladite transmission comprennent des moyens de détection (101) de l'entrée ou non en contact dudit pignon (71) avec ladite roue (72), ladite valeur seuil de l'information représentative de ladite déformation déclenchant la désactivation desdits moyens de freinage (9) étant atteinte lorsque ledit pignon (71) et ladite roue (72) n'entrent plus en contact alors que lesdits moyens d'activation (101) activent lesdits moyens de freinage (9).

**10.** Bras selon la revendication 9, dans lequel lesdits moyens de détection (101) de l'entrée en contact dudit pignon (71) avec ladite roue (72) comprennent ledit pignon et ladite roue dentée qui constituent un circuit électrique ouvert tant qu'il ne sont pas en contact et fermé lorsqu'ils sont en contact.

**11.** Bras articulé selon l'une quelconque des revendications 8 à 10, dans lequel la différence entre lesdits entraxes est comprise entre 0,1 et 0,5 fois la hauteur des dents dudit pignon (71) et de ladite roue (72).

**12.** Bras selon l'une quelconque des revendications 8 à 11, dans lequel la différence dE entre lesdits entraxes est déterminée selon la formule suivante :

$$dE = C_{max} / (K. \sin(alpha).F)$$

avec alpha : angle de pression de l'engrenage
K : raideur du câble
F : facteur de sécurité
Cmax : charge maximale sur le câble

**13.** Bras articulé selon l'une quelconque des revendications 1 à 12 dans lequel ledit bras (3) est monté mobile en rotation par rapport audit bâti (1) selon une pluralité d'axes, ledit bras articulé comprenant autant d'ensemble de moyens moteur, de transmission principale, moyens d'évaluation du couple, de moyens de freinage, de moyens d'activation, de moyens d'évaluation d'au moins une information représentative d'une déformation, de moyens de désactivation, et le cas échéant de transmission auxiliaire, que d'axes autour desquels ledit bras (3) peut tourner, chaque ensemble étant dédié à la transmission de couple selon un desdits axes.

**14.** Application du bras selon l'une quelconque des revendications 1 à 13 à un domaine technique appartenant au groupe comprenant :

- interface haptique avec un environnement virtuel ;
- interface haptique avec un environnement de réalité augmentée ;
- rééducation thérapeutique ;
- conception assistée par ordinateur;
- téléopération ;
- entraînement sportif;
- formation aux gestes techniques.

**15.** Procédé de pilotage d'un bras articulé motorisé d'interface haptique comprenant au moins :

- un bâti (1) ;
- un bras (3) lié audit bâti (1) de manière mobile en rotation autour d'au moins un axe (2), des efforts étant susceptibles d'être appliqués audit bras (3) par son environnement ;
- des moyens moteurs (5), comprenant un rotor, conçus pour délivrer au moins un couple résistant maximal autour dudit axe (2) s'opposant au moins en partie auxdits efforts appliqués audit bras (3) par son environnement ;

- une transmission principale (6) audit bras (3) dudit couple résistant généré par lesdits moyens moteurs (5), ladite transmission principale (6) comprenant un réducteur à câble (63) à cabestan ;
- des moyens de freinage (9) de la rotation dudit bras (3) autour dudit axe (2) :

ledit procédé comprenant :

- une étape d'évaluation dudit couple résistant transmis audit bras (3) par lesdits moyens moteurs (5) ;
- une étape d'activation desdits moyens de freinage (9) lorsque ledit couple résistant maximal est atteint par lesdits moyens moteurs (5) ;
- une étape d'évaluation, après activation desdits moyens de freinage (9), des efforts transmis audits bras (3) par ledit environnement, comprenant une étape de détermination d'au moins une information représentative d'une déformation de ladite transmission principale (6) sous l'effet desdits efforts ;
- une étape de désactivation desdits moyens de freinage (9) lorsque ladite information représentative d'une déformation de ladite transmission principale (6) devient inférieure à une valeur seuil prédéterminée.

16. Procédé de pilotage d'un bras articulé motorisé selon la revendication 15, dans lequel ladite étape d'évaluation d'au moins une information représentative d'une déformation de ladite transmission (6) sous l'effet desdits efforts transmis audit bras (3) par son environnement après activation desdits moyens de freinage (9) comprend :

- une étape de détermination de la position angulaire dudit rotor autour de son axe de rotation ;
- une étape d'estimation de la position angulaire théorique dudit bras (3) autour de son axe de rotation par rapport audit bâti (1) à partir de ladite position angulaire dudit rotor ;
- une étape de détermination de la position angulaire réelle dudit bras (3) autour de son axe de rotation par rapport audit bâti (1) ;
- une étape de détermination de la différence entre ladite valeur théorique et ladite valeur réelle de la position angulaire dudit bras (3) autour de son axe de rotation (2) ;

ladite étape de désactivation étant mise en oeuvre lorsque ladite différence devient inférieure à ladite valeur seuil prédéterminée.

17. Procédé de pilotage d'un bras articulé motorisé selon la revendication 15 ou 16, ledit bras articulé motorisé comprenant une transmission auxiliaire (7) dudit couple résistant audit bras (3), ladite transmission auxiliaire (7) pouvant prendre au moins deux états :

- un état inactif, pris tant que lesdits efforts appliqués sur ledit bras (3) par son environnement contre l'effet dudit couple sont inférieurs à un seuil prédéterminé, dans lequel ladite transmission auxiliaire (7) ne transmet aucun couple audit bras (7);
- un état actif, pris lorsque lesdits efforts appliqués sur ledit bras (3) par son environnement contre l'effet dudit couple sont supérieurs à un seuil prédéterminé, dans lequel ladite transmission principale (6) ne transmet aucun couple audit bras (3).

ladite transmission auxiliaire (7) comprenant :

- un pignon (71) lié auxdits moyens moteurs (5) et monté dans l'axe de ladite poulie (61),
- au moins une portion de roue dentée (72) solidaire dudit élément d'entrainement (62) et engrenant avec ledit pignon (71) ;

le rapport de réduction de ladite transmission auxiliaire (77) étant identique à celui de ladite transmission principale (6), l'entraxe entre l'axe de rotation dudit pignon (71) et l'axe de rotation de ladite roue dentée (72) étant supérieur à l'entraxe entre l'axe de rotation de ladite poulie (61) et l'axe de rotation dudit élément d'entrainement (62) de telle sorte que ledit pignon (71) et ladite roue (72) sont en contact et engrènent l'un avec l'autre seulement lorsque ladite transmission auxiliaire (7) est dans ledit état actif ; ladite étape d'évaluation d'au moins une information représentative d'une déformation de ladite transmission (6) comprenant une étape de détection de l'entrée ou non en contact dudit pignon (71) avec ladite roue (72), ladite valeur seuil de l'information représentative de ladite déformation déclenchant la désactivation desdits moyens de freinage (9) étant atteinte lorsque ledit pignon (71) et ladite roue (725) n'entrent plus en contact alors que lesdits moyens de freinage (9) sont activés.

**Patentansprüche**

1. Motorisierter Gelenkarm mit haptischer Schnittstelle, der wenigstens aufweist:

- ein Gestell (1);
- einen Arm (3), der drehbewegbar um wenigstens eine Achse (2) mit dem Gestell (1) verbunden ist, wobei Kräfte von seiner Umgebung auf den Arm (3) aufgebracht werden können;
- Motormittel (5), die einen Rotor aufweisen und dazu eingerichtet sind, wenigstens ein maximales Widerstandsdrehmoment um die Achse (2) bereitzustellen, das sich wenigstens teilweise gegen die von seiner Umgebung auf den Arm (3) aufgebrachten Kräfte richtet;
- ein Hauptgetriebe (6) zum Übertragen des durch die Motormittel (5) erzeugten Widerstandsdrehmoments auf den Arm (3), wobei das Hauptgetriebe (6) eine Winden-Kabeluntersetzung (63) aufweist;
- Mittel zum Auswerten des Widerstandsdrehmoments, das durch die Motormittel (5) auf den Arm (3) übertragen werden;
- Mittel zum Bremsen (9) der Rotation des Arms (3) um die Achse (2);
- Mittel zum Aktivieren (101) der Mittel zum Bremsen (9), wenn das maximale Widerstandsdrehmoment durch die Motormittel (5) erreicht ist;
- Mittel zum Auswerten (101, 102, 103), nach dem Aktivieren der Mittel zum Bremsen (9), der von der Umgebung auf den Arm (3) übertragenen Kräfte, wobei die Mittel zum Auswerten Mittel zum Bestimmen wenigstens einer Information aufweisen, die für eine Deformation des Getriebes (6) unter der Wirkung der Kräfte repräsentativ ist;
- Mittel zum Deaktivieren (101) der Mittel zum Bremsen (9), wenn die Information, die für eine Deformation des Getriebes (6) repräsentativ ist, kleiner als ein vordefinierter Schwellwert wird.

2. Arm nach Anspruch 1, in welchem die Mittel zum Auswerten (101, 102, 103) wenigstens einer Information, die für eine Deformation des Getriebes repräsentativ ist, Mittel zum Auswerten der Deformation des Kabels (63) aufweisen.

3. Arm nach Anspruch 1 oder 2, in welchem die Mittel zum Auswerten wenigstens einer Information, die für eine Deformation des Getriebes unter der Wirkung der von seiner Umgebung auf den Arm (3) übertragenen Kräfte repräsentativ ist, nach dem Aktivieren der Mittel zum Bremsen (9) aufweisen:

   - Mittel zum Bestimmen (102) der Winkelposition des Rotors um seine Rotationsachse;
   - Mittel zum Schätzen (102, 101) der theoretischen Winkelposition des Arms (3) um seine Rotationsachse bezüglich des Gestells (1) ausgehend von der Winkelposition des Rotors;
   - Mittel zum Bestimmen (101, 103) der realen Winkelposition des Arms (3) um seine Rotationsachse bezüglich des Gestells (1);
   - Mittel zum Bestimmen (101) des Unterschieds zwischen dem theoretischen Wert und dem realen Wert der Winkelposition des Arms (3) um seine Rotationsachse;

wobei die Mittel zum Deaktivieren (101) eingerichtet sind, die Mittel zum Bremsen (9) zu deaktivieren, wenn der Unterschied kleiner als der vordefinierte Schwellwert wird.

4. Arm nach Anspruch 3, in welchem die Mittel zum Bestimmen (101, 103) der realen Winkelposition des Arms (3) um seine Rotationsachse bezüglich des Gestells (1) einen Winkelpositionssensor (103) des Arms um seine Rotationsachse aufweisen.

5. Arm nach einem der Ansprüche 1 bis 4, in welchem das Hauptgetriebe (6) aufweist:

   - ein Antriebselement (62), das drehbar mit dem Arm (3) verbunden ist, wobei das Antriebselement wenigstens einen Winkelsektor aufweist, dessen Achse mit der Rotationsachse (2) des Arms (3) koinzidiert;
   - eine Antriebsscheibe (61), die mit den Motormitteln (5) verbunden ist;

wobei sich das Kabel (63) der Kabeluntersetzung entlang des Winkelsektors (62) gerollt um die Scheibe (61) erstreckt, wobei die Enden des Kabels (63) an dem Antriebselement (62) fixiert sind.

6. Arm nach einem der Ansprüche 1 bis 5, der ein Hilfsgetriebe (7) zum Übertragen des Widerstandsdrehmoments auf den Arm (3) aufweist, wobei das Hilfsgetriebe wenigstens zwei Zustände einnehmen kann:

   - einen inaktiven Zustand, der solange eingenommen wird, wie die von seiner Umgebung auf den Arm (3) aufgebrachten Kräfte gegen die Wirkung des Drehmoments niedriger als ein vordefinierter Schwellwert sind, in welchem das Hilfsgetriebe (7) kein Drehmoment auf den Arm (3) überträgt;
   - einen aktiven Zustand, der dann eingenommen wird, wenn die von seiner Umgebung auf den Arm (3) aufgebrachten Kräfte gegen die Wirkung des Drehmoments größer als ein vordefinierter Schwellwert sind, in welchem das Hauptgetriebe (6) kein Drehmoment auf den Arm (3) überträgt.

7. Gelenkarm nach Anspruch 6, in welchem das Hilfsgetriebe (7) konfiguriert ist, den aktiven Zustand dann einzunehmen, wenn die von der Umgebung auf den Arm (3) gegen die Wirkung des Widerstandsdrehmoments aufgebrachten Kräfte eine Deformation des Kabels induzieren, die einen vorbestimmten Schwellwert übersteigt.

8. Gelenkarm nach Anspruch 7, in welchem das Hilfsgetriebe (7) aufweist:

- ein Ritzel (71), das mit den Motormitteln verbunden ist und in der Achse der Scheibe (61) montiert ist,

- wenigstens einen Teil eines Zahnrades (72), der mit dem Antriebselement (62) verbunden ist und in das Ritzel (71) eingreift;

wobei das Untersetzungsverhältnis des Hilfsgetriebes (7) identisch mit dem des Hauptgetriebes (6) ist, wobei der Achsabstand zwischen der Rotationsachse des Ritzels (71) und der Rotationsachse des Zahnrades (72) größer als der Achsabstand zwischen der Rotationsachse der Scheibe (61) und der Rotationsachse des Antriebselementes (62) derart ist, dass das Ritzel (71) und das Rad (72) nur dann in Kontakt sind und ineinander eingreifen, wenn sich das Hilfsgetriebe (7) in dem aktiven Zustand befindet.

9. Arm nach Anspruch 8, in welchem die Mittel zum Auswerten wenigstens einer Information, die für eine Deformation des Getriebes repräsentativ ist, Mittel zur Detektion (101) des Eintritts oder nicht des Kontaktes des Ritzels (71) mit dem Rad (72) aufweisen, wobei der Schwellwert der Information, der für die Deformation repräsentativ ist, der die Deaktivierung der Mittel zum Bremsen (9) auslöst, dann erreicht ist, wenn das Ritzel (71) und das Rad (72) nicht mehr in Kontakt stehen während die Mittel zum Aktivieren (101) die Mittel zum Bremsen (9) aktivieren.

10. Arm nach Anspruch 9, in welchem die Mittel zum Detektieren (101) des Eintritts des Ritzels (71) in Kontakt mit dem Rad (72) das Ritzel und das Zahnrad aufweisen, die einen elektrischen Stromkreis bilden, der solange geöffnet ist, solange sie nicht in Kontakt sind, und der geschlossen ist, wenn sie in Kontakt sind.

11. Gelenkarm nach einem der Ansprüche 8 bis 10, in welchem der Unterschied zwischen den Achsabständen innerhalb eines Bereiches von 0,1 bis 0,5 mal der Höhe der Zähne des Ritzels (71) und des Zahnrades (72) enthalten ist.

12. Arm nach einem der Ansprüche 8 bis 11, in welchem der Unterschied dE zwischen den Achsabständen gemäß der folgenden Formel bestimmt wird:

$$dE = Cmax / (K.sin(alpha).F)$$

mit alpha: Winkel des Druckes der Verzahnung
K: Steifigkeit des Kabels
F: Sicherheitsfaktor
Cmax: maximale Last auf dem Kabel

13. Gelenkarm nach einem der Ansprüche 1 bis 12, in welchem der Arm (3) drehbewegbar bezüglich des Gestells (1) gemäß einer Vielzahl von Achsen montiert ist, wobei der Gelenkarm ebenso viele Sätze von Motormitteln, von Hauptgetrieben, Mitteln zum Auswerten des Drehmoments, von Mitteln zum Bremsen, von Mitteln zum Aktivieren, von Mitteln zum Auswerten wenigstens einer Information, die für eine Deformation repräsentativ ist, von Mitteln zum Deaktivieren und gegebenenfalls von Hilfsgetrieben, wie es Achsen gibt, um die sich der Arm (3) drehen kann, aufweist, wobei jeder Satz der Übertragung des Drehmoments gemäß einer der Achsen gewidmet ist.

14. Anwendung des Arms nach einem der Ansprüche 1 bis 13 in einem technischen Gebiet, das zur Gruppe gehört, umfassend:

- haptische Schnittstelle mit einer virtuellen Umgebung;
- haptische Schnittstelle mit einer Umgebung der erweiterten Realität;
- therapeutische Rehabilitation;
- computergestütztes Design;
- Telebetrieb;
- Sporttraining;
- Trainieren technischer Gesten.

15. Verfahren zum Steuern eines motorisierten Gelenkarmes mit haptischer Schnittstelle, der wenigstens aufweist:

- ein Gestell (1);
- einen Arm (3), der mit dem Gestell (1) drehbewegbar um wenigstens eine Achse (2) verbunden ist, wobei die Kräfte von seiner Umgebung auf den Arm (3) aufgebracht werden können;
- Motormittel (5), die einen Rotor aufweisen und die dazu eingerichtet sind, wenigstens ein maximales Widerstandsdrehmoment um die Achse (2) zu liefern, das wenigstens teilweise den Kräften, die von seiner Umgebung auf den Arm (3) aufgebracht werden, entgegen wirkt;
- ein Hauptgetriebe (6) zum Übertragen des Widerstandsdrehmoments, das durch die Motormittel (5) erzeugt wird, auf den Arm (3), wobei das Hauptgetriebe (6) eine Winden-Kabeluntersetzung (63) aufweist;
- Mittel zum Bremsen (9) der Rotation des Arms (3) um die Achse (2);

wobei das Verfahren aufweist:

- einen Schritt des Auswertens des Widerstandsdrehmoments, das durch die Motormittel (5) auf den Arm (3) übertragen wird;
- einen Schritt des Aktivierens der Mittel zum Bremsen (9), wenn das maximale Widerstandsdrehmoment durch die Motormittel (5) erreicht ist;

- einen Schritt des Auswertens, nach dem Aktivieren der Mittel zum Bremsen (9), der von der Umgebung auf den Arm (3) übertragenen Kräfte, aufweisend einen Schritt des Bestimmens wenigstens einer Information, die für eine Deformation des Hauptgetriebes (6) unter der Wirkung der Kräfte repräsentativ ist;

- einen Schritt des Deaktivierens der Mittel zum Bremsen (9), wenn die Information, die für eine Deformation des Hauptgetriebes (6) repräsentativ ist, niedriger als ein vorbestimmter Schwellwert wird.

16. Verfahren zum Steuern eines motorisierten Gelenkarmes nach Anspruch 15, in welchem der Schritt des Auswertens wenigstens einer Information, die für eine Deformation des Getriebes (6) unter der Wirkung der von seiner Umgebung auf den Arm (3) übertragenen Kräfte repräsentativ ist, nach dem Aktivieren der Mittel zum Bremsen (9) aufweist:

- einen Schritt des Bestimmens der Winkelposition des Rotors um seine Rotationsachse;
- einen Schritt des Schätzens der theoretischen Winkelposition des Arms (3) um seine Rotationsachse bezüglich des Gestells ausgehend von der Winkelposition des Rotors;
- einen Schritt des Bestimmens der realen Winkelposition des Arms (3) um seine Rotationsachse bezüglich des Gestells (1);
- einen Schritt des Bestimmens des Unterschiedes zwischen dem theoretischen Wert und dem realen Wert der Winkelposition des Arms (3) um seine Rotationsachse (2);
- wobei der Schritt des Deaktivierens dann aufgeführt wird, wenn der Unterscheid niedriger als der vorbestimmte Schwellwert wird.

17. Verfahren zum Steuern eines motorisierten Gelenkarmes nach Anspruch 15 oder 16, wobei der motorisierte Gelenkarm ein Hilfsgetriebe (7) zum Übertragen des Widerstandsdrehmomentes auf den Arm (3) aufweist, wobei das Hilfsgetriebe (7) wenigstens zwei Zustände einnehmen kann:

- einen inaktiven Zustand, der solange eingenommen wird, wie die von seiner Umgebung auf den Arm (3) aufgebrachten Kräfte gegen die Wirkung des Drehmoments geringer als ein Schwellwert sind, in welchem das Hilfsgetriebe (7) kein Drehmoment auf den Arm (3) überträgt;
- einen aktiven Zustand, der dann eingenommen wird, wenn die von seiner Umgebung auf den Arm (3) aufgebrachten Kräfte gegen die Wirkung des Drehmoments größer als ein vorbestimmter Schwellwert sind, in welchem das Hauptgetriebe (6) kein Drehmoment auf den Arm (3) überträgt,

wobei das Hilfsgetriebe (7) aufweist:

- ein Ritzel (71), das mit den Motormitteln (5) verbunden ist und in der Achse der Scheibe (61) montiert ist;
- wenigstens einen Teil eines Zahnrades (72), der mit dem Antriebselement (62) verbunden ist und in das Ritzel (71) eingreift;

wobei das Untersetzungsverhältnis des Hilfsgetriebes (77) identisch mit dem des Hauptgetriebes (6) ist,

wobei der Achsabstand zwischen der Rotationsachse des Ritzels (71) und der Rotationsachse des Zahnrades (72) größer als der Achsabstand zwischen der Rotationsachse der Scheibe (61) und der Rotationsachse des Antriebselementes (62) ist, derart, dass das Ritzel (71) und das Rad (72) nur dann in Kontakt sind und ineinander eingreifen, wenn sich das Hilfsgetriebe (7) in dem aktiven Zustand befindet;

wobei der Schritt des Auswertens wenigstens einer Information, die für die Deformation des Getriebes (6) repräsentativ ist, einen Schritt des Erkennens, ob das Ritzel (71) mit dem Rad (72) in Kontakt gekommen ist oder nicht, aufweist, wobei der Schwellwert der Information, die für Deformation repräsentativ ist, der die Deaktivierung der Mittel zum Bremsen (9) auslöst, dann erreicht wird, wenn das Ritzel (71) und das Rad (725) nicht länger in Kontakt kommen während die Mittel zum Bremsen (9) aktiviert sind.

## Claims

1. Motor-driven articulated haptic interface arm comprising at least:

- a frame (1);
- an arm (3) linked to said frame (1) so as to be rotationally mobile about at least one axis (2), forces being liable to be applied to said arm (3) by its environment;
- motor means (5) comprising a rotor, designed to deliver at least one maximum resistant torque about said axis (2) opposing at least one part of said forces applied to said arm (3) by its environment;
- a main transmission (6) for the transmission to said arm (3) of said resistant torque generated by said motor means (5) about said axis (2), said main transmission (6) comprising a capstan-type cable reducer (63);

- means for evaluating said resistant torque transmitted to said arm (3) by said motor means (5) ;
- means for braking (9) the rotation of said arm (3) about said axis ;
- means for activating (101) said means for braking (9) when said maximum resistant torque is reached by said motor means (5);
- means for evaluating (101, 102, 103), after activation of said means for braking (9), the forces transmitted to said arm (9) by said environment, comprising means for determining at least one piece of information representing a deformation of said transmission (6) under the effect of said forces;
- means for deactivating (101) said means for braking (9) when said piece of information representing a deformation of said transmission (6) goes below a predetermined threshold value.

2. Arm according to claim 1, wherein said means for evaluating (101, 102, 103) at least one piece of information representing a deformation of said transmission comprise means for evaluating the deformation of said cable (63).

3. Arm according to claim 1 or 2, wherein said means for evaluating at least one piece of information representing a deformation of said transmission under the effect of said forces transmitted to said arm (3) by its environment after activation of said means for braking (9) comprise:

    - means for determining (102) the angular position of said rotor about its axis of rotation;
    - means for estimating (102, 101) the theoretical angular position of said arm (3) about its axis of rotation relative to said frame (1) from said angular position of said rotor;
    - means for determining (101, 103) the real angular position of said arm (3) about its axis of rotation relative to said frame (1);
    - means for determining (101) the difference between said theoretical value and said real value of the angular position of said arm (3) about its axis of rotation;

    said means for deactivating (101) being designed to deactivate said means for braking (9) when said difference goes below said pre-determined threshold value.

4. Arm according to claim 3, wherein said means for determining (101, 103) the real angular position of said arm (3) about its axis of rotation relative to said frame (1) comprise a sensor (103) for sensing the angular position of said arm about its axis of rotation.

5. Articulated arm according to any one of the claims 1 to 4, wherein said main transmission (6) comprises:

    - a drive element (62) rotationally linked to said arm (3), said drive element (62) comprising at least one angular sector, the axis of which coincides with the axis of rotation (2) of said arm (3);
    - a drive pulley (61) linked to said motor means (5);

    said cable (63) of said cable reducer extending along said angular sector (62) in getting wound about said pulley (61), the extremities of said cable (63) being fixed to said drive element (62).

6. Arm according to any one of the claims 1 to 5, comprising an auxiliary transmission (7) for the transmission of said resistant torque to said arm (3), said auxiliary transmission being capable of taking at least two states:

    - an inactive state, taken so long as said forces applied to said arm (3) by its environment against the effect of said torque are below a predetermined threshold, in which said auxiliary transmission(7) transmits no torque to said arm (3);
    - an active state taken when said forces applied to said arm (3) by its environment against the effect of said torque are higher than a predetermined threshold, in which said main transmission (6) transmits no torque to said arm (3).

7. Articulated arm according to claim 6, wherein said auxiliary transmission (7) is configured to take said active state when the forces applied by the environment to said arm (3) against the effect of said resistant torque induce a deformation of said cable (63) that is above a predetermined threshold.

8. Articulated arm according to claim 7, wherein said auxiliary transmission(7) comprises:

    - a pinion (71) linked to said motor means (5) and mounted in the axis of said pulley (61),
    - at least one toothed-wheel portion (72) fixedly attached to said drive element (62) and meshing with said pinion (71);

    the reduction ratio of said auxiliary transmission (7) being identical to that of said main transmission (6), the center distance between the axis of rotation of said pinion (71) and the axis of rotation of said toothed wheel (72) being greater than the center distance between the axis of rotation of said pulley (61) and the axis of rotation of said drive element (62) in such a way that said pinion (71) and said wheel (72)

are in contact and mesh with each other only when said auxiliary transmission (7) is in said active state.

9. Arm according to claim 8, wherein said means for evaluating at least one piece of information representing a deformation of said transmission comprise means for detecting (101) that said pinion (71) has or has not come into contact with said wheel (72), said threshold value of the piece of information representing said deformation, which triggers the deactivation of said means for braking (9), being reached when said pinion (71) and said wheel (72) no longer come into contact while said means of activation activate said means for braking (9).

10. Arm according to claim 9, wherein said means for detecting (101) that said pinion (71) has come into contact with said wheel (72) comprise said pinion and said toothed wheel which constitute an open electrical circuit so long as they are not in contact and a closed electrical circuit when they are in contact.

11. Articulated arm according to any one of the claims 8 to 10, wherein the difference between said center distances ranges from 0.1 to 0.5 times the height of the teeth of said pinion (71) and of said wheel (72).

12. Arm according to any one of the claims 8 to 11, wherein the difference dE between said center distances is determined according to the following formula:

$$dE = Cmax / (K. \sin(alpha).F)$$

with alpha: angle of pressure of the gearing
K: stiffness of cable
F: factor of security
Cmax: maximum load on the cable

13. Articulated arm according to any one of the claims 1 to 12 wherein said arm (3) is mounted so as to be rotationally mobile relative to said frame (1) along a plurality of axes, said articulated arm comprising as many sets of motor means, main transmission means, means for evaluating torque, means for braking, activation means, means for evaluating at least one piece of information representing a deformation, means of deactivation and, as the case may be, auxiliary transmission means as there are axes around which said arm (3) can rotate, each set being dedicated to the transmission of torque along one of said axes.

14. Application of the arm according to any one of the claims 1 to 13 to a technical field belonging to the group comprising:

- haptic interfacing with a virtual environment;
- haptic interfacing with an augmented reality environment;
- therapeutic re-education;
- computer-assisted design;
- tele-operation;
- sports training;
- training in technical gestures.

15. Method for controlling a motor-driven articulated haptic interface arm comprising at least:

- a frame (1);
- an arm (3) linked to said frame (1) so as to be rotationally mobile about at least one axis (2), forces being liable to be applied to said arm (3) by its environment;
- motor means (5), comprising a rotor, designed to deliver a least one maximum resistant torque about said axis (2) opposing at least in part said forces applied to said arm (3) by its environment;
- a main transmission (6) for the transmission to said arm (3) of said resistant torque generated by said motor means (5), said main transmission (6) comprising at least one capstan cable reducer (63);
- means for braking (9) the rotation of said arm (3) about said axis;

said method comprising:

- a step for evaluating said resistant torque transmitted to said arm (3) by said motor means (5);
- a step for activating said means for braking (9) when said maximum resistant torque is attained by said motor means (5);
- a step of evaluation, after activation of said means for braking (9), of the forces transmitted to said arm (3) by said environment, comprising a step for determining at least one piece of information representing a deformation of said main transmission (6) under the effect of said forces;
- a step for deactivating said means for braking (9) when said piece of information representing a deformation of said main transmission (6) goes below a predetermined threshold value.

16. Method for controlling a motor-driven articulated arm according to claim 15, wherein said step for evaluating at least one piece of information representing a deformation of said transmission (6) under the effect of said forces transmitted to said arm (3) by its environment after activation of said means for braking (9) comprises:

- a step for determining the angular position of said rotor about its axis of rotation;
- a step for estimating the theoretical angular position of said arm about its axis of rotation relative to said frame from said angular position of said rotor;
- a step for determining the real angular position of said arm (3) about its axis of rotation relative to said frame (1) ;
- a step for determining the difference between said theoretical value and said real value of the angular position of said arm (3) about its axis of rotation (2) ;

said step for deactivating being implemented when said difference goes below said predetermined threshold value.

**17.** Method for controlling a motor-driven articulated arm according to claim 15 or 16, said motor-driven articulated arm comprising an auxiliary transmission (7) for transmitting said resistant torque to said arm (3), said auxiliary transmission (7) being capable of taking at least two states:

- an inactive state, taken so long as said forces applied to said arm (3) by its environment against the effect of said torque are below a predetermined threshold, in which said auxiliary transmission (7) transmits no torque to said arm (7) ;
- an active state taken when said forces applied to said arm (3) by its environment against the effect of said torque are higher than a predetermined threshold, in which said main transmission (6) transmits no torque to said arm (3).

said auxiliary transmission (7) comprising:

- a pinion (71) linked to said motor means (5) and mounted in the axis of the said pulley (61),
- at least one toothed-wheel portion (72) fixedly attached to said drive element (62) and meshing with said pinion (71;

the reduction ratio of said auxiliary transmission (77) being identical to that of said main transmission (6), the center distance between the axis of rotation of said pinion (71) and the axis of rotation of said toothed wheel (72) being greater than the center distance between the axis of rotation of said pulley (61) and the axis of rotation of said drive element (62) in such a way that said pinion (71) and said wheel (72 are in contact and mesh with each other only when said auxiliary transmission (7) is in said active state; said step of determination of at least one piece of information representing a deformation of said transmission (6) comprising a step for detecting that said pinion (71) has or has not come into contact with said wheel (72), said threshold value of the piece of information, representing said deformation that triggers the deactivation of said means for braking (9), being reached when said pinion (71) and said wheel (72) no longer come into contact while said means for braking are activated.

Fig. 1

Fig. 2

Fig. 3

Fig. 4

Fig. 5

Fig. 6

Fig. 7

Mesure couple moteur — 90

Couple > valeur seuil

Activation frein — 91

Evaluation efforts transmis au bras par son environnement — 92

Mesure déformation transmission principale — 920

Position angulaire rotor — 921

Position angulaire théorique du bras — 922

Position angulaire réelle du bras — 923

Différence entre position théorique et position réelle — 924

Différence < valeur seuil

Désactivation frein — 93

Fig. 8

Mesure couple moteur — 90

Couple > valeur seuil

Activation frein — 91

Evaluation efforts transmis au bras par son environnement — 92

Mesure déformation transmission principale — 920

Vérification contact entre pignon et roue dentée — 921'

Pignon et roue dentée plus en contact

Désactivation frein — 93

Fig. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5046375 A

**Littérature non-brevet citée dans la description**

- Force display using a hybrid haptic device composed of motors and brakes. **TAE-BUM KWON ; JAE-BOK SONG.** Mechatronics. Elsevier ScienceDirect, 2006